## Europäisches Patentamt
## European Patent Office
## Office européen des brevets

(19)

(11) Veröffentlichungsnummer: **0 121 920**
**B1**

(12) # EUROPÄISCHE PATENTSCHRIFT

(45) Veröffentlichungstag der Patentschrift:
02.06.89

(21) Anmeldenummer: **84103919.1**

(22) Anmeldetag: **06.04.84**

(51) Int. Cl.⁴: **B 65 G 21/06,** B 65 G 21/02,
B 65 G 23/22, B 65 G 41/00

(54) **Bandfördervorrichtung.**

(30) Priorität: **12.04.83 DE 8310752 U**

(43) Veröffentlichungstag der Anmeldung:
**17.10.84 Patentblatt 84/42**

(45) Bekanntmachung des Hinweises auf die Patenterteilung:
**02.06.89 Patentblatt 89/31**

(84) Benannte Vertragsstaaten:
**AT BE CH DE FR GB IT LI LU NL SE**

(56) Entgegenhaltungen:
EP-A-0 074 648
CH-A-297 218
FR-A-1 332 939
FR-A-2 077 429
FR-A-2 465 662
US-A-3 059 589
US-A-3 593 591
US-A-3 944 054

(73) Patentinhaber: **Geppert, Helmut, Niederfeld 12,
D-5162 Niederzier- Krauthausen (DE)**

(72) Erfinder: **Geppert, Helmut, Niederfeld 12, D-5162
Niederzier- Krauthausen (DE)**

(74) Vertreter: **Liermann, Manfred, Josef- Schregel-
Strasse 19, D-5160 Düren (DE)**

EP 0 121 920 B1

LIBER, STOCKHOLM 1989

## Beschreibung

Die Erfindung bezieht sich auf eine Bandfördervorrichtung mit einem Fördermittel in Form eines oder mehrerer Bänder oder Riemen oder Scharnierbänder, insbesondere Kleinbandförderer, mit einem durch ein mit einem Bodensteg gleichzeitig als Gleitblech für das Obertrum des Fördermittels dienendes selbsttragendes U- oder C-Profil gebildeten Tragrahmen für dieses, mit mindestens einem Standfuß, mit einer Antriebswalze und einer Umlenkwalze und mit einem Antriebsmotor für die Antriebswalze. Sie betrifft insbesondere eine solche Bandfördervorrichtung in Ausführung als Kleinbandförderer, wie sie beispielsweise in der Kunststoffindustrie zum Abfördern von Spritzgußformlingen von einer Spritzgußmaschine oder dergl. Verwendung finden.

Bandfördervorrichtungen dieser Art sind bekannt (US-A-3 944 054).

Zur Erzielung gesteigerter Leichtbauweise ist es bereits bekannt, den Förderbandrahmen solcher Bandfördervorrichtungen aus gegenüberliegenden Rahmenlängsholmen zu bilden, die jeweils als C-Profil ausgebildet und mittels einer Anzahl Querholme miteinander verbunden sind. Abgesehen davon, daß solche bekannten Bandfördervorrichtungen von ihrer Funktionsweise her zwar durchaus befriedigend sein können, hat die Erfahrung jedoch ergeben, daß insbesondere bei Ausführungen in Form von Kleinbandförderern der Aufwand für Lagerhaltung und Montage der für die Erstellung eines solchen Förderers erforderlichen Einzelteile und der daraus resultierende Gestehungspreis in keinem tragbaren Verhältnis zum erzielbaren Marktpreis steht. Hier ist zu berücksichtigen, daß einerseits für die Erstellung der Querholme mit ihren Anschlußflanschen neben einem nicht unbeträchtlichen Materialaufwand wenn auch an handelsüblich verfügbarem Profilmaterial und marktgängigen Maschinenelementen in Form von Schraubbolzen, Muttern und Unterlegscheiben für die benötigten Verschraubungen ein nicht unerheblicher Lohnkostenaufwand zu verkraften ist.

Außerdem hat es sich in manchen Einsatzfällen als nachteilig erwiesen, daß durch die Notwendigkeit der Verschraubung der Querholme mit den Längsholmprofilen des Rahmengestells solcher bekannter Bandfördervorrichtungen unvermeidlich eine gewisse Anzahl der in den Bodenstegen der die Rahmenlängsholme bildenden Profile in linienförmiger Anordnung mit gleichem Lochabstand vorgesehenen Löcher besetzt ist und daher nicht für den Anbau von an solcher Stelle der Länge des Rahmengestells benötigten Zusatzaggregaten oder dergl. zur Verfügung steht.

Der Erfindung liegt somit die Aufgabe zugrunde, mit einfachen und kostengünstigen Mitteln unter Vermeidung der Nachteile bekannter Ausführungen von Bandfördervorrichtungen eine Möglichkeit zu schaffen, Bandfördervorrichtungen gattungsgemäßer Art bei ausreichender Biege- und Torsionssteifigkeit und im Interesse gesteigerter Leichtbauweise höchstens gleichem Relativgewicht bezogen auf eine vorgegebene spezifische Gewichtsbelastung durch Fördergut mit einem Minimum an Einzelteilen und geringstmöglichem Montageaufwand so erstellen zu können, daß eine möglichst große Universalität von Anbaumöglichkeiten für Zusatzaggregate am Rahmengestell der Bandfördervorrichtung gewährleistet ist, um eine solche Bandfördervorrichtung bestmöglich an die jeweiligen Erfordernisse des Förderbetriebes anpassen und erforderlichenfalls einfach, schnell und bequem für etwaige andere Förderaufgaben umrüsten zu können.

Das wird durch die Erfindung in überraschend einfacher und wirtschaftlicher Weise bei einer gattungsgemäßen Bandfördervorrichtung mit Tragrahmen dadurch gelöst, daß dessen sich von seinen Bodenstegen gleichsinnig etwa normal wegerstreckende Seitenstege jeweils eine Vielzahl von auf einer bodenstegparallelen Linie, vorzugsweise der Mittellinie des jeweiligen Seitenstegs, linienrastermäßig angeordneten Löchern gleichen Lochabstandes und zumindest in der oder quer zur Richtung dieser Rasterlinie gleicher Lochgröße aufweisen und daß ein Lagerschild für den Antriebsmotor, Walzenträgerpaare je für die Umlenkwalze und die Antriebswalze und der Standfuß mittels in der Rasteranordnung der Löcher des Tragrahmens entsprechender Anordnung vorgesehene Löcher in diesen Bauteilen durchgreifende Schraubelemente mit den Seitenstegen des Tragrahmens verschraubt sind, wobei ein Walzenträger eines Walzenträgerpaares gleichzeitig als Lagerschild für den Antriebsmotor ausgebildet ist.

Es hat sich überraschend herausgestellt, daß für gleiche spezifische Tragfähigkeit das Gewicht pro Meter Länge des Rahmengestells einer Bandfördervorrichtung nach der Erfindung keineswegs größer zu sein braucht als das von bekannten Bandfördervorrichtungen eingangs beschriebener Art, die hinsichtlich ihrer Leichtbauweise gerade im Hinblick auf bestmögliche Biege- und Torsionssteifigkeit von der Fachwelt als ein nicht mehr zu unterbietendes Optimum angesehen werden. Der Erfinder hat jedoch erkannt, daß bezogen auf den gesamten Verbund der Rahmengestellkonstruktion bei diesen bekannten Ausführungen, bedingt durch deren Konzeption, Massenkonzentrationen an bestimmten Stellen auftreten, an denen sie aus Gründen ausreichender Biegen und Torsionssteifigkeit eigentlich nicht vonnöten wären. Hierzu zählen einerseits die aufgrund der handelsüblichen Abmessungen und Wandstärken von Kreis- oder Rechteckrohrprofilen erforderlichen Materialansammlungen an singulären Stellen im Bereich der Querholme ebenso wie die Anschlußflansche derselben, die aus Gründen eigener Festigkeit und Verwindungssteifigkeit eine bestimmte Materialstärke nicht unterschreiten können. Es hat sich herausgestellt, daß im Rahmen bestimmter Abmessungsverhältnisse, wie diese insbesondere bei sogenannten Kleinförderbändern bis hin zu mittelgroßen Ausführungen aufzutreten pflegen, eine ausreichende Tragfähigkeit sich nicht nur bei gleichem Metergewicht, sondern sogar bei geringerem Metergewicht erreichen läßt, wenn man den für eine befriedigende Leichtbauweise bisher für unerläßlich gehaltenen Weg der zusammengesetzten Bauweise verläßt, welche gewichtsmäßig auch noch durch zumindest einen der Seitenstege nebst Randsteg des C-Profils herkömmlicher Förderbandrahmen-Konstruktionen und die für die Festlegung der Querholme derselben erforderlichen Schraubelemente gewichtsmäßig belastet ist, und statt dessen auf ein einziges durchgehendes selbsttragendes Profil spezifischer Ausbildung übergeht, das je nach Belastungs- bzw. Einsatzfall dann sogar eine geringere Wandstärke als die bisher zur Verwendung gekommenen handelsüblichen Profilteile aufweisen kann, zumal es keineswegs als Walzprofil ausgebildet zu sein braucht, sondern durchaus und mit Vorzug als Blechbiegeformling ausgeführt sein kann.

Auf jeden Fall aber erbringt die Erfindung den kostenmäßig ganz wesentlich ins Gewicht fallenden Vorteil der Einsparung zwar nicht der Kosten für Montage der Aufgabe- und Abgabewalzen, der Standfußkonstruktion und aller vom Förderbandrahmen zu tragenden Zusatzaggregate, wie nicht zuletzt des Antriebsmotors für das Fördermittel, wohl aber der Kosten für die Erstellung des Förderbandrahmens selbst, da dieser nach der Konzeption der Erfindung seinerseits ein einziges durchgehendes selbsttragendes Profil ist.

Weiterhin ist aufgabengemäß gewährleistet, daß ein Maximum an Löchern für den Anschluß anderer Bauteile zur Verfügung steht, indem durch die Konzeption der Erfindung vermieden ist, daß überhaupt Löcher in den seitlichen Bauteilen des Förderbandrahmens, welche nach der Erfindung durch die beiden Seitenstege des Tragrahmens gebildet werden, durch für die Tragrahmenbildung erforderliche Verschraubungen besetzt sind. Hierdurch ergibt sich eine weitestmögliche Universalität von Anbaumöglichkeiten für Zusatzaggregate am Rahmengestell der Bandfördervorrichtung an praktisch beliebiger gewünschter Stelle über der Länge desselben. Weiterhin wird hierdurch der Vorteil erbracht, erforderlichenfalls eine solche Vorrichtung höchst einfach, schnell und bequem von einer für die. Erfüllung bestimmter Förderaufgaben zweckdienlichen Ausrüstung für andere Förderaufgaben umrüsten zu können.

In zweckmäßiger Fortbildung der Erfindung kann der Antriebsmotor gemäß Anspruch 2 am durch den Tragrahmen gebildeten Förderbandrahmen festgelegt sein. Wie bei bekannten Bandfördervorrichtungen kann bzw. können auch bei einer Bandfördervorrichtung nach der Erfindung die Aufgabewalze(n) oder die Abgabewalze(n) als Antriebswalze(n) ausgebildet sein. Diese können ferner zweckmäßig am Tragrahmen gehaltert sein. Obgleich grundsätzlich der Antriebsmotor seinen eigenen Lagerschild aufweisen und die Aufgabewalze(n) ebenso wie die Abgabewalze(n) jeweils ihre eigene Halterung besitzen können, kann im Interesse einer Geringhaltung der einzelnen Bauteile ebenso wie aus Gründen konstruktiver Einfachheit und besonders guter betrieblicher Handhabbarkeit einer der Lagerschilde des Antriebsmotors gleichzeitig als der eine Walzenträger des Walzenträgerpaares für die Antriebswalze(n) ausgebildet sein. Andererseits aber können die Aufgabewalze(n) und/oder die Abgabewalze(n) zweckmäßig jeweils auch gemäß Anspruch 3 gehaltert sein. Dabei ergibt sich eine konstruktiv besonders einfache und herstellungstechnisch besonders günstige Ausführung gemäß Anspruch 4.

Soll keine Umlenkwalze als Antriebswalze vorgesehen sein, so kann bzw. können im Rahmen der Erfindung eigens eine oder mehrere Antriebswalze(n) vorgesehen und angeordnet sein.

Ungeachtet dessen, wie die Ausführung und Anordnung der Antriebswalze(n) gewählt wird, kann es insbesondere für die Anpassung der Bandlaufeigenschaften an veränderte Fördergutbeladungsverhältnisse ebenso wie geänderte Fördergeschwindigkeiten zweckmäßig sein, wenn eine oder mehrere Umlenkwalze(n), vorzugsweise ein oder mehrere Paare solcher Umlenkwalzen bzw. Sätze derselben, gemäß Anspruch 5 vorgesehen und angeordnet wird bzw. werden. Insbesondere empfiehlt sich eine solche Weiterbildung der Erfindung dann, wenn zusätzlich zu Umlenkwalzen eine Antriebswalze oder ein Satz derselben vorgesehen ist. In diesem Falle kann mit Vorteil mindestens eine Umlenkwalze bzw. ein Satz derselben der Antriebswalze bzw. dem Satz derselben vorgeordnet und/oder mindestens eine Umlenkwalze bzw. ein Satz derselben der Antriebswalze bzw. dem Satz derselben nachgeordnet und zumindest eine dieser Umlenkwalzen bzw. einer der Sätze derselben von dem Paar von Walzenträgern der Antriebswalzenwelle getragen sein. Andererseits aber kann auch jede Umlenkwalze bzw. jeder Satz derselben in einem eigenen Paar von Walzenträgern gehalten sein.

Soll unter Ausnutzung der Konzeption der Erfindung ein Knickbandförderer erstellt werden, so kann dieser entsprechend einem untergeordneten Erfindungsgedanken gemäß Anspruch 7 ausgeführt sein. Zweckmäßig kann dabei jeweils der eine Schenkel eines jeden Lagerträgers eine Lagerungseinrichtung für die Achse der Umlenkwalze(n) und der andere Schenkel eines jeden Lagerträgers eine Lagerungseinrichtung für die Achse der Niederhalterolle(n) aufweisen. Hierdurch ergeben sich nicht nur konstruktiv besonders einfache und herstellungstechnisch besonders kostengünstige Ausführungen der Lagerträger, sondern auch eine besondere Vereinfachung der Montage von Umlenkwalze(n) und/oder Niederhalterolle(n) und eine bisher nicht für möglich gehaltene gute Zugänglichkeit derselben für Wartungszwecke.

Grundsätzlich kann im Rahmen der Erfindung ein bestimmtes Winkelmaß der Neigungsänderung von einem Zweig zum anderen des Knickbandförderers fest vorgegeben sein, jedoch gibt es erfahrungsgemäß sowohl betriebstechnisch, als auch bereits aus investitionsmäßigen Gesichtspunkten gewichtige Gründe dafür, bei einer Bandfördervorrichtung nach der Erfindung die Förderneigung von einem Zweig zum anderen variabel halten zu können, wobei dies tunlichst sogar während des Förderbetriebes möglich sein sollte. Diese Aufgabe wird gemäß Anspruch 9 dadurch gelöst, daß die Schenkel beider Lagerträger der Umlenkeinrichtung in ihrer Winkelstellung zueinander veränderbar sind.

Soll die Zuordnung der Schenkel der Lagerträger zu dem jeweils zugeordneten Seitensteg des Rahmentragprofils fest sein, so kann in weiterer Fortbildung der Erfindung die Bandfördervorrichtung zweckmäßig gemäß Anspruch 10 ausgebildet sein. Andererseits hat sich aber auch eine Alternative hierzu sowohl aus konstruktiven als auch aus fertigungstechnischen Gründen besonders bewährt, bei der die Lagerträger gemäß Anspruch ausgebildet sind. Dabei kann in weiterer zweckmäßiger Fortbildung zur Erzielung eigenständiger Spannwirkung im Bereich der Umlenkstelle (Knickstelle) einer solchen als Knickbandförderer ausgebildeten Bandfördervorrichtung nach der Erfindung diese gemäß Anspruch 12 ausgebildet sein.

Aus vielfältigen Gründen stellt sich erfahrungsgemäß häufig die Aufgabe, eine Nachstellung einzelner betriebswichtiger Bauteile einer Bandfördervorrichtung vornehmen zu müssen, wie beispielsweise in Anpassung an unterschiedliche spezifische Fördergutbelastungen des Fördermittels oder geänderte Fördergeschwindigkeiten desselben oder aber Verschleiß- bzw. Ermüdungserscheinungen oder dergl.. Hierfür sieht die Erfindung gemäß einem untergeordneten Erfindungsgedanken eine besonders einzelteilarme, geringen Bauraum benötigende, konstruktiv ausgesprochen einfache und betriebsmäßig zuverlässige Lösung vor, welche sich dadurch kennzeichnet, daß die Befestigungslöcher des Lagerschildes für den Antriebsmotor und/oder der Walzenträger der Aufgabewalze(n) und/oder der Abgabewalze(n) und/oder der Lagerschilde der Antriebswalze(n) und/oder der Lagerflansche der Umlenkwalze(n) und/oder der Schenkel der Lagerträger der Umlenkeinrichtung jeweils als sich in Richtung der Rasterlinie der Löcher in den Seitenstegen des Haupttragrahmens bzw. bei Ausführung der Bandfördervorrichtung nach der Erfindung als Knickbandförderer des weiteren Tragrahmends erstreckende Langlöcher ausgebildet sind, wobei vorzugsweise jeweils eine Spanneinrichtung vorgesehen ist, mittels derer der betreffende Lagerschild bzw. Walzenträger bzw. Lagerflansch bzw. Lagerträgerschenkel formschlüssig stufenlos in Richtung dieser Rasterlinie verstellbar und in Arbeitsstellung festlegbar ist. Dabei ergibt sich eine sowohl aus konstruktiven als auch aus fertigungstechnischen Gründen besonders bewährte Ausführung für den Fall des Einsatzes von Spanneinrichtungen für Lagerschild(e) und/oder Walzenträger und/oder Lagerflansch(e) und/oder Lagerträgerschenkel der Umlenkeinrichtung gemäß Anspruch 14. In weiterer vorteilhafter Fortbildung kann dabei die Spannverschraubung gemäß Anspruch ausgebildet sein.

Der Förderbandrahmen in Form des bei Geradförderern ihn bildenden Tragrahmens, der bei Ausführungen als Knickbandförderer jeweils als Haupttragrahmen bezeichnet wird, der bei Knickbandfördererbauweise noch mindestens einen weiteren Tragrahmen aufweist, kann durch mindestens einen Standfuß abgestützt werden. Dabei empfiehlt sich für schwere Ausführungen solcher Bandfördervorrichtungen eine Ausführung gemäß Anspruch 16.

Für bestimmte Einsatzfälle hat es sich als zweckmäßig erwiesen, wenn neben oder alternativ zu paarweise vorgesehenen Standfüßen gemäß Anspruch 17 einzeln stehende Standfüße mit den Förderbandrahmen tragenden Querholmen vorgesehen sind. Insbesondere für Kleinbänder sowohl in Geradband- als auch in Knickbandausführung kann zweckmäßig lediglich ein einziger solcher Standfuß ausreichen. Eine Einrichtung zur ortsfesten Festlegung kann entweder als Fußplatte oder aber auch als Standschemel ausgebildet sein, der vorzugsweise verfahrbar und/oder relativ zum Querholm höhenverstellbar sein kann. Insbesondere kann mit Vorzug gemäß Anspruch 20 eine Höhenverstellbarkeit durch teleskopische Ineinanderverschiebbarkeit wenigstens zweier Teile der Standpfeiler mindestens eines Paares von Standpfeilern oder der bzw. mindestens eines der einzeln vorgesehenen Standpfeiler erbracht werden. Ungeachtet dessen, ob der Förderbandrahmen durch paarweise vorgesehene Standfüße oder aber durch einzeln vorgesehene Standfüße mit entsprechenden ihn tragenden Querholmen abzustützen ist, kann in weiterer zweckmäßiger Fortbildung zur Erleichterung der Montage die Bandfördervorrichtung gemäß Anspruch 21 ausgebildet sein, wobei insbesondere auch schrägstehende Bandanordnungen mit ansteigender oder einfallender Förderungen möglich sind.

Zur Steigerung der Universalität der Einsetzbarkeit einer Bandfördervorrichtung nach der Erfindung kann in weiterer zweckmäßiger Fortbildung derselben gleichfalls ungeachtet der Art der standfußmäßigen Abstützung des Förderbandrahmens gemäß Anspruch 22 eine Möglichkeit für beliebige Einstellbarkeit der positiven oder negativen Förderneigung erreicht werden, wobei diese durchaus sogar während des laufenden Förderbetriebes möglich sein kann, sofern eine solche Bandfördervorrichtung entweder am Anfang oder Ende einer Förderlinie angeordnet ist oder aber das nachgeschaltete Förderaggregat auch bei aufgrund geänderter Förderneigung verändertem Anförderungsniveau das Fördergut zu übernehmen oder aber die Bandfördervorrichtung nach veränderter Einstellung ihrer Förderneigung das Fördergut von dem vorgeschalteten Förderaggregat noch zu übernehmen vermag.

In weiterer Vervollkommnung der Erfindung kann ferner auch für die Nutzung eines Steuerpultes für den Antriebsmotor gemäß Anspruch 23 Sorge getragen werden.

Ferner hat die Praxis erwiesen, daß für vielfaltige Förderaufgaben es zu bevorzugen ist, wenn in weiterer Vervollkommnung der Erfindung gemäß Anspruch 24 für die Bereitstellung mindestens einer Seitenführungsleiste für das Fördergut, vorzugsweise eines Paares solcher Führungsleisten, gesorgt ist. Dabei kann bzw. können solche Führungsleiste(n) zweckmäßig gemäß Anspruch 25 ausgebildet und angeordnet sein.

Gemäß einem die Erfindung weiterhin zweckmäßig fortbildenden anderen untergeordneten Erfindungsgedanken kann auch mindestens eine U-förmige Blechrinne gemäß Anspruch 26 vorgesehen sein. Diese kann vorzugsweise als Unfallschutz für den Laufspalt des Untertrums des Fördermittels im Bereich der Aufgabewalze(n) und/oder der Abgabewalze(n) oder aber als Sicherheitsabdeckung für etwa vorhandene Führungs- und/oder Andrückwalzen Verwendung finden, falls erwünscht. Dabei kann eine solche U-förmige Blechrinne sowohl bei Verwendung von U- als auch C-Profilmaterial für den Tragrahmen zum Einsatz kommen, wobei deren Seitenstege dann die nach unten weisenden Seitenstege des Tragrahmens übergreifen oder aber in den linken Raum zwischen diesen eingreifen können. Im letztgenannten Fall sind die Seitenstege der U-förmigen Blechrinne bei als C-förmiges Profil ausgebildetem Tragrahmen allerdings an den Randstegen des letzteren zu verschrauben. Alternativ oder zusätzlich zu einer oder mehreren solchen U-förmigen Blechrinnen kann auch ein Deckblech gemäß Anspruch 27 zum Einsatz kommen, wenn der Tragrahmen durch ein C-förmiges Profilteil gebildet ist, um die gleichen Aufgaben zu lösen. Wird einer solchen Blechrinne bzw. einem solchen Deckblech eine Länge gemäß Anspruch 28 gegeben, so kann hierdurch spezifisch zur Erhöhung der Biege- und Torsionssteifigkeit des gesamten Rahmengebildes beigetragen werden, wobei sich hier die wünschte Wirkung durch entsprechende Wahl der Zahl der Verschraubungen beeinflussen läßt. Erhält eine solche Blechrinne und/oder ein solches Deckblech eine Länge gemäß Anspruch 29, so ergibt sich trotz Aufrechterhaltung einer gewissen zusätzlichen Aussteifungswirkung, die für bestimmte Einsatzfälle der Bandfördervorrichtung nach der Erfindung durchaus erwünscht sein kann, neben einer entsprechenden guten Leichtbauweise auch eine erwünschte Variabilität hinsichtlich Offenhaltung von Anbaumöglichkeiten für Zusatzaggregate und etwa erwünschten Zugriffsmöglichkeiten zum Untertrum des Fördermittels an vorbestimmten Stellen.

Zur feinfühligen Anpassung der Abdeckung gefährlicher Zugriffsstellen zum Untertrum des Fördermittels können im Interesse einer verbesserten Verhütung von Unfallgefahren die Befestigungslöcher der Blechrinne(n) bzw. des bzw. der Deckbleche(s) als sich parallel zur Richtung der Mittellängsachse der jeweiligen Blechrinne bzw. des jeweiligen Deckbleches erstreckende Langlöcher ausgebildet sein.

Bei manchen Fördereinsätzen kann es sich ergeben, daß das Fördermittel auf seiner jeweils innenliegenden Unterseite einen Feuchtigkeitsfilm mit sich führt. Dieser Feuchtigkeitsfilm kann erfahrungsgemäß die Ursache dafür sein, daß sich das über die nach außen liegende Oberfläche des aufgabengemäß als Gleitblech wirkenden Tragrahmens gleitende unterseitig feuchte Obertrum des Fördermittels am Tragrahmen festsaugt und es zu einer Erhöhung des Kraftbedarfes des Motors kommt, die insbesondere dann zu unangenehmen Spitzen seiner Leistungsaufnahme zu führen pflegt, wenn diese Ansaugerscheinungen des Obertrums des Fördermittels kurzzeitig oder plötzlich auftreten. Um hier wirkungsvoll Abhilfe zu schaffen, kann in weiterer zweckmäßiger Fortbildung der Erfindung der erste Tragrahmen und/oder ein etwaiger weiterer Tragrahmen gemäß Anspruch 31 ausgebildet sein. Dabei können mit Vorzug die Löcher gemäß Anspruch 32 angeordnet sein.

Im folgenden wird die Erfindung anhand mehrer Ausführungsbeispiele, die in den Zeichnungen jeweils in schematischer Darstellung wiedergegeben sind, rein beispielsweise näher erläutert. Dabei zeigen:

Figur 1    in auseinandergezogener Darstellung eine Ausführungsform der Erfindung in Form eines Geradförderers

Figur 2    in gleichfalls teilweise auseinandergezogener Darstellung eine andere Ausführungsform eines Standfußes für diesen,

Figur 3    in gleichfalls auseinandergezogener Darstellung den Bereich der Knickstelle und der Aufgabestelle für das Fördergut einer Ausführungsform der Erfindung in Form eines Knickbandförderers, und

Figur 4    in drei in schematischer Stirnansicht wiedergegebenen Varianten Möglichkeiten für unterseitige Abdeckung des Tragrahmens.

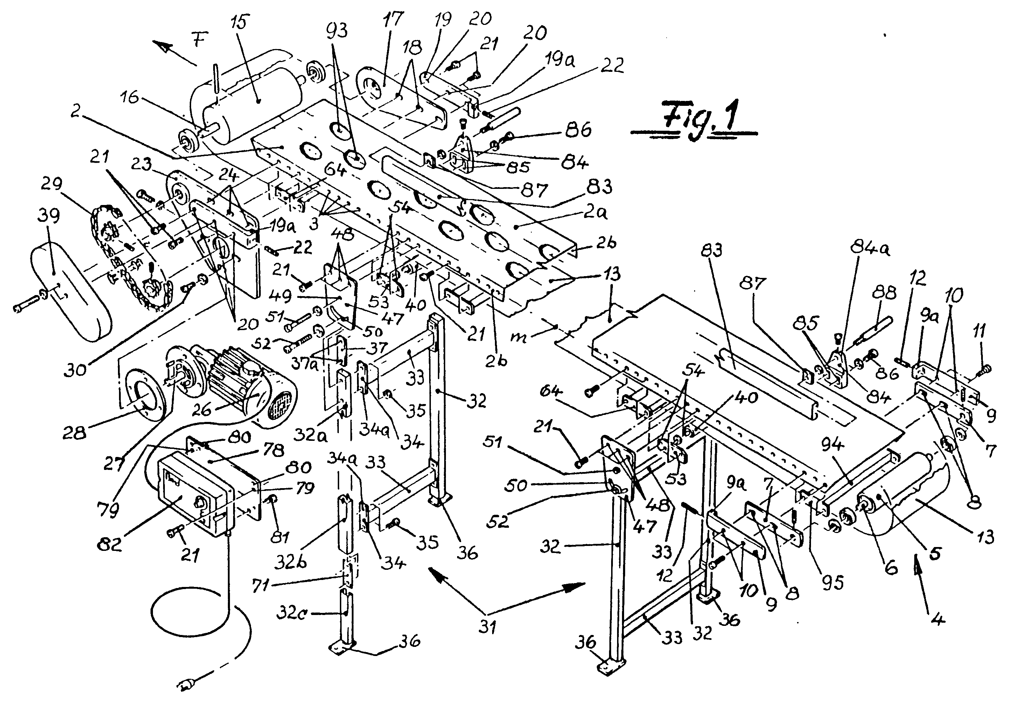

Wie insbesondere aus Figur 1 ersichtlich, ist für die Bildung des Förderbandrahmens lediglich ein Tragrahmen 2 vorgesehen, der bei diesem Ausführungsbeispiel der Erfindung als U-Profil mit ebenem Bodensteg 2a und sich von diesem gleichsinnig etwa normal wegerstreckenden Seitenstegen 2b ausgebildet ist. Die Seitenstege 2b weisen auf ihrer Mittellinie m jeweils eine Vielzahl in gleichem Abstand zueinander angeordneter Löcher 3 auf, die hier als Rundlöcher ausgebildet sind, aber auch als beispielsweise Langlöcher mit in der oder wenigstens quer zur Richtung der Rasterlinie m gleicher Größe ausgebildet sein könnten. Dieses mit seinem Bodensteg 2a nach oben weisend angeordnete U-Profil 2 ist selbsttragend und bildet bereits für sich allein den Tragrahmen für die als Ganzes mit bezeichnete Bandfördervorrichtung.

Der so gebildete Tragrahmen 2 wird von einem Paar von Standfüßen 31 getragen, die jeweils aus einem Paar von Standpfeilern 32 gebildet sind, welche durch zwei Querholme 33 miteinander verbunden sind, die als Abschnitte von Rundrohr oder Rechteckrohrmaterial ausgebildet sein können und an deren Stirnenden jeweils Anschlußflansche 34 beispielsweise durch Schweißen festgelegt sind, die Löcher 34a aufweisen, welche mit entsprechenden Löchern in den Standpfeilern 32 fluchten, so daß mittels Schraubelementen 35 ein biege- und torsionssteifer Standfuß 31 aus Standpfeilern 32 und Querholmen 33 gebildet werden kann. Dabei können die Standpfeiler 32 entweder einstückig ausgebildet sein, wie bei dem rechten Standfuß 3 dargestellt, oder aber aus mehreren Teilstücken 32a, 32b, 32c zusammengesetzt sein, die teleskopisch ineinander einführbar sind, wie bei dem einen Standpfeiler des linken Standfußes 31 durch auseinandergezogene Darstellung verdeutlicht. Die Standpfeiler können aus Rechteckrohr und/oder aus einem anderen Profilmaterial, wie beispielsweise einem C-Profil 31c, erstellt sein, wie dargestellt. Zur Verbindung einzelner Teilstücke eines Standpfeilers 32 können in dessen Inneres einführbare Laschen 71 vorgesehen sein, welche als Klemmplatten oder Widerlager für entsprechende zwar angedeutete, nicht jedoch näher dargestellte Verschraubungen dienen. Eine Ausführung mit aus mindestens zwei gegeneinander teleskopierbaren Teilen gebildeten Standpfeilern 32 wird immer dort vorzusehen sein, wo es gilt, ohne Austausch der Standfüße 31 gegen andere die Förderneigung der Bandfördervorrichtung zu verändern. Die Standpfeiler 32 selbst weisen an ihren unteren Enden jeweils Fußplatten 36 auf.

Zur Anpassung an eine bei Veränderung der Förderneigung der Bandfördervorrichtung 1 notwendigerweise auftretende Änderung der relativen Winkelstellung von Förderbandrahmen bzw. dieses bildendem Tragrahmen 2 und Standpfeilern 32 sind Schwenkflansche 47 vorgesehen, von denen jeweils einer einem Standpfeiler 32 zugeordnet ist und die längs ihres oberen Randes eine Anzahl von Löchern 48 etwa gleicher Größe wie der der Löcher 3 der Seitenstege 2b des Tragrahmens 2 aufweisen, welche in gleicher Rasteranordnung wie letztere vorgesehen sind, so daß die Schwenkflansche 47 über geeignete Schraubelemente, die aus Schraubbolzen, Mutter mit Unterlegscheibe und gegebenenfalls Kontermutter bestehen können, an beliebiger geeigneter Stelle der Seitenstege 2b des Tragrahmens 2 festgelegt werden können. Die Schwenkflansche 47 weisen jeweils weiterhin ein Loch 49 und einen zu diesem konzentrischen kreisbogenförmigen Schlitz 50 auf, wobei der dem Krümmungsradius desselben entsprechende Abstand zum Mittelpunktsloch 49 dem Abstand zweier Flanschlöcher 37a in jeweils einem am oberen Ende eines jeden Standpfeilers 32 durch Verschraubung festlegbaren Anschlußflansch 37 entspricht. Durch das Mittelpunktsloch 49 des Schwenkflansches 47 und das obere Loch 37a des Anschlußflansches 37 greift ein als Schwenklager dienender Schraubbolzen 51 hindurch, der mittels Mutter mit Unterlegscheibe und gegebenenfalls Kontermutter, erforderlichenfalls unter Zuhilfenahme einer Klemmplatte, festgelegt werden kann. Durch den kreisbogenförmigen Schlitz 50 des Schwenkflansches 47 und das untere Loch 37a des Anschlußflansches 37 greift eine Feststellverschraubung 53 hindurch, mittels derer der Schwenkflansch 47 und mit ihm der Tragrahmen 2 in jeder beliebigen Schwenkstellung, die der Länge des Kreisbogenschlitzes 50 entspricht, festlegbar ist.

An der rechts unten gezeigten Aufgabestelle für das Fördergut ist eine praktisch über der ganzen Breite des durch den Tragrahmen 2 gebildeten Förderbandrahmen durchgehende Aufgabewalze 5 mit einer Achse 6 vorgesehen, die unter Zwischenschaltung von zwar dargestellten, nicht jedoch näher bezeichneten Lagern und Distanzringen und Zwischenlegscheiben von einem Paar von Walzenträgern 7 abgestützt wird, von denen jeder auf seiner umlenkwalzenwellen bzw. -achsenfernen Seite mindestens zwei Langlöcher 8 aufweist, die in der Rasteranordnung der Löcher 3 im zugeordneten Seitensteg 2b des Tragrahmens 2 entsprechender Anordung vorgesehen sind, wie dargestellt, wobei der Lochabstand zweier benachbarter Langlöcher 8 im Walzenträger 7 keineswegs stets dem Lochabstand zweier benachbarter Löcher im zugeordneten Seitensteg 2b des Tragrahmens 2 zu entsprechen braucht, vielmehr durchaus auch einem Vielfachen des letztgenannten Lochabstandes betragen kann, wie beispielsweise dem Doppelten (vergleiche auch die Darstellung in Fig. 1). Die Achse 6 der Umlenkwalze 5 der als Ganzes mit 4 bezeichneten Umlenkwalzenhalterungseinrichtung ist lediglich in ein entsprechendes Aufnahmeloch im jeweiligen Walzenträger 7 eingeschoben und kann mit einer zwar dargestellten, nicht jedoch näher bezeichneten Madenschraube in ihrer gewünschten axialen Stellung fixiert werden. Jeder der Walzenträger 7 wird von einer Widerlagerleiste 9 übergriffen, welche der Anordnung der Langlöcher 8 im Walzenträger 7 entsprechend angeordnete Rundlöcher 10 aufweist, die demnach in ihrer Anordnung auch der Rasteranordnung der Löcher 3 im zugeordneten Seitensteg 2b des Tragrahmens 2 entsprechen. Durch diese Löcher in der Widerlagerleiste 9 und die Langlöcher 8 im Walzenträger 7 sowie die mit diesen fluchtenden zugeordneten Löcher 3 im Seitensteg 2b des Tragrahmens 2 greifen Schraubelemente 11 hindurch, die mit einer den Seitensteg 2b des Tragrahmens 2 hintergreifenden Klemmplatte verschraubbar sind. Die Widerlagerleisten 9 weisen jeweils an ihrem umlenkwalzenwellen- bzw. -achsenfernen Ende einen sich das Ende des Walzenträgers 7 übergreifend zum Tragrahmen 2 hin erstreckenden Widerlagerflansch 9a auf, der mit einem Gewindeloch versehen ist, durch das eine Stellschraube 12 schraubbar ist, die mit ihrem Förderende sich gegen eine entsprechende Anschlagfläche am Walzenträger 7, beispielsweise eine Stirnfläche desselben, legt und bei gelockerter Verschraubung 1 es ermöglicht, durch mehr oder weniger großes Einschrauben in den Widerlagerflansch 9a den Walzenträger 7 und mit ihm das von ihm getragene Achsende der Umlenkwalze 5 mehr oder weniger weit gegenüber dem Stirnende des Tragrahmens 2 zu verschieben. Ist die gewünschte Arbeitsstellung errreicht, braucht lediglich die Verschraubung festgezogen zu werden, um diese Arbeitsstellung des Walzenträgers 7 zu fixieren. Es ist hervorzuheben, daß die Klemmplatte dieser Verschraubung durchaus durch den Anschlußflansch 95 eines die Aufgabestelle für das Fördergut aussteifenden Querholms 94 gebildet sein kann, der durch einen Abschnitt von Kreis- oder Rechteckrohrmaterial gebildet sein kann, an dem beidendig jeweils ein Anschlußflansch 95 beispielsweise durch Schweißen festgelegt ist.

Am anderen Ende des durch den Tragrahmen 2 gebildeten Förderbandrahmens ist eine gleichfalls über praktisch dessen gesamter Breite durchgehende Abgabewalze 15 einer als Ganzes mit 14 bezeichneten Walzenhalterungseinrichtung mit ihrer Welle 16 unter Zwischenschaltung von zwar dargestellten, nicht jedoch näher bezeichneten Lagern in einem Paar von Walzenträgern 7 abgestützt, die jeweils auf ihrer walzenfernen Seite eine Anzahl in Richtung der Rasterlinie m der Löcher 3 in den zugeordneten Seitenstegen 2b des Tragrahmens 2 verlaufender Langlöcher 18 aufweisen, deren Anordnung so getroffen ist, daß sie der Rasteranordnung der Löcher 3 im zugeordneten Seitensteg 2b des Tragrahmens 2 in ähnlicher Weise entspricht, wie vorstehend bereits für die Walzenträger 7 der Umlenkwalzenhalterungseinrichtung 4 beschrieben. In der gleichen Weise werden die walzenfernen Enden der Walzenträger 17 für die Walze 5 jeweils von einer Widerlagerleiste 19 übergriffen, die mindestens zwei in der Anordnung der Langlöcher 18 im Walzenträger 17 entsprechender Anordnung vorgesehene Rundlöcher 20 und an ihrem walzenfernen Ende einen das zugeordnete Ende des Walzenträgers 17 übergreifend sich in Richtung des Tragrahmens 2 erstreckenden Widerlagerflansch 19a mit einem Gewindeloch aufweist, in das in bereits im Zusammenhang mit der Umlenkwalzenhalterungseinrichtung 4 beschriebener Weise eine Spannschraube 22 einschraubbar ist, die mit ihrem abgabewalzennahen Ende sich an eine Anlagefläche am Walzenträger 17, die im Interesse möglichst geringer Baubreite mit Vorzug eine Stirnfläche desselben sein kann, anlegt und mittels derer in gleicher Weise, wie im Zusammenhang mit der spannfähigen Halterung der Umlenkwalze 5 bereits beschrieben, der Walzenträger 17 und mit ihm das von ihm getragene Ende der Welle 16 der Walze 15 mehr oder weniger weit gegenüber dem zugeordneten Stirnende des Tragrahmens 2 versetzt werden kann. Zum Festspannen des Walzenträgers 17 in seiner gewünschten Arbeitsstellung sind dann durch die Löcher 20 in der Widerlagerleiste 19 und gleichzeitig die Langlöcher 18 im Walzenträger 17 sowie die zugeordneten Löcher 3 im zugeordneten Seitensteg 2b des Tragrahmens 2 hindurchgreifende Schraubelemente 21 vorgesehen, die in bereits beschriebener Weise mit einer hier verdeckten Klemmplatte zusammenwirken, deren auf der gegenüberliegenden Seite wirksames Gegenstück jedoch erkennbar und mit 64 bezeichnet ist.

Zusätzlich zu einer solchen Halterungseinrichtung 14 für die beim vorliegenden Ausführungsbeispiel als Antriebswalze fungierende Walze 15 mit zwei Walzenträgern 17 der in Figur 1 links oben dargestellten und vorstehend beschriebenen Ausführung kann ferner am Tragrahmen 2 ein Lagerschild 23 für einen Antriebsmotor 26 festgelegt sein, und zwar dies mittels durch in der Rasteranordnung der Löcher 3 im Tragrahmen 2 entsprechender Anordnung vorgesehene Löcher 24 hindurchgreifender Schraubelemente 21. Dabei können zweckmäßig die Löcher 24 als sich in Richtung der Rasterlinie m der Löcher 3 im zugeordneten Seitensteg 2b des Tragrahmens 2 erstreckende Langlöcher ausgebildet sein, um eine gewisse Verschieblichkeit des Lagerschildes 23 und mit diesem des Antriebsmotors 26 gegenüber dem Tragrahmen 2 zu Nachjustierungszwecken zu gewährleisten. Durch diese läßt sich auch eine gewisse Nachspannung des in Form eines Kettentriebes 29 ausgebildeten kinematischen Übertragungskettenzuges bei Beibehaltung der über die Stellschrauben 22 in den Widerlagerleisten 19 eingestellten Arbeitsstellung der Welle 16 der Antriebswalze 15 erreichen.

Beim in Figur 1 dargestellten Ausführungsbeispiel ist jedoch aus Gründen besonders einfacher konstruktiver Ausgestaltung und der Einsparung von Einzelteilen der Lagerschild 23 gleichzeitig zu einem der beiden Walzenträger für die Antriebswelle 16 umfunktioniert, indem er zusätzlich eine der Lagerungsaufnahme für die Welle 16 im gegenüberliegenden Walzenträger 17 entsprechende Lagerungsaufnahme erhalten hat, durch welche die Welle 16 hindurchgreift, um auf ihrem freien Ende das Abtriebsritzel des Kettentriebes 29 zu tragen, dessen Eintriebsritzel mit der Abtriebwelle 27 des im übrigen als Getriebemotor ausgebildeten Antriebsmotors 26 verkeilt ist, der unter Verwendung eines Zwischenlagerringes 28 von der Fördererinnenseite des nunmehr als Walzenträger dienenden Lagerschildes 23 her eine entsprechende Durchtrittsausnehmung 25 für seine Abtriebswelle 27 durchgreifend mittels Verschraubungen 30 am Lagerschild 23 festgelegt ist. Der Kettentrieb 29 ist mittels eines Kettenkastens 39 abgedeckt, der am Lagerschild 23 festgelegt ist. Im übrigen erfolgt die Einstellverschiebung des Lagerträgers 23 in der gleichen Weise mittels einer Stellschraube 22 und einer Widerlagerleiste 9, wie für den gegenüberliegenden Walzenträger 17 vorstehend bereits beschrieben.

Weiterhin sind in Figur 1 die einen Lagerschilde zweier Paare von Lagerschilden 53 für Führungswalzen 40 für das Untertrum des als praktisch die gesamte Breite des Tragrahmens 2 durchgehend übergreifendes Einzelband ausgeführten und in Förderrichtung F fördernden Fördermittels 13 dargestellt, welche jeweils eine Aufnahmebohrung für die Achse der zugeordneten Führungswalze 40 und längs ihres oberen Randes jeweils mindestens zwei in der Rasteranordnung der Löcher 3 des Tragrahmens 2 entsprechender Anordnung vorgesehene Löcher 54 aufweisen, über die sie mit jeweils einem zugeordneten Seitensteg 2b des Tragrahmens 2 mittels Schraubelementen, die mit Vorzug aus Schraubbolzen, Mutter mit Unterlegscheibe und gegebenenfalls Kontermutter bestehen können (nicht dargestellt), an beliebiger für wünschenswert oder erforderlich erachteter Arbeitsstelle verbunden werden können.

Das Ausführungsbeispiel gemäß Figur 1 zeigt ferner eine Seitenbegrenzungs- bzw. Seitenführungsleiste eines Paares von jeweils auf einer Seite des Fördermittels 13 längs desselben angeordneten Seitenbegrenzungs- bzw. Seitenführungsleisten 83 für das Fördergut. Diese Seitenführungsleisten 83 sind jeweils als C-Profil ausgeführt und mit ihrem ebenen Bodensteg zur Förderbandmitte hinweisend angeordnet. An mindestens zwei in Abstand zueinander gelegenen Stellen sind jeweils Klemmplatten 87 die nach außen liegenden Randstege ihres C-Profils von der Seite ihres Profilhohlraums her hintergreifend eingeführt, in die ein Schraubelement 88 einschraubbar ist, das eine Bohrung in einem hochstehenden Lappen 84a eines zugeordneten Tragflansches 84 durchgreift, der längs seines unteren Randes mindestens zwei in der Rasteranordnung der Löcher 3 im zugeordneten Seitensteg 2b des Tragrahmens 2 entsprechender Anordnung vorgesehene Löcher 85 aufweist, über die er mittels diese durchgreifender Schraubelemente 86 mit dem betreffenden Seitensteg 2b des Tragrahmens 2 verschraubt ist, so daß auf diese Weise die Seitenführungsleiste 83 in gewünschter Arbeitsstellung oberhalb des Obertrums des Fördermittels 13 gehalten wird.

Dem Lagerschild 23 benachbart ist beim Ausführungsbeispiel gemäß Figur 1 ein weiterer Lagerschild 78 für ein Steuerpult 82 für den Antriebsmotor 26 dargestellt, das mindestens zwei in der Rasteranordnung der Löcher 3 des zugeordneten Seitensteges 2b des Tragrahmens 2 entsprechender Anordnung vorgesehene Löcher 79 aufweist und über Verschraubungen 21, die wiederum mit Vorzug aus Schraubbolzen, Mutter mit Unterlegscheibe und Kontermutter und erforderlichenfalls einer Klemmplatte 64 bestehen können, am Tragrahmen 2 festlegbar ist. Mittels durch weitere Löcher 80 hindurchgreifender Verschraubungen 81 ist an diesem Lagerschild 78 das Steuerpult 82 festgelegt.

Schließlich ist noch darauf hinzuweisen, daß im linken Bereich des in Figur 1 dargestellten Tragrahmens 2 angedeutet ist, daß dieser in seinem Bodensteg 2a eine Anzahl Löcher 93 aufweisen kann, welche nicht nur zur Verringerung des Gewichtes desselben dienen, sondern wesentlich wichtigere Bedeutung für das Abstreifen von auf der Unterseite des Obertrums des Fördermittels 13 etwa anhaftender Feuchtigkeit und damit die Vermeidung einer unerwünschten Ansaugwirkung auf das Fördermittel 13 haben, durch welche der Förderbetrieb empfindlich gestört werden könnte. Wie ersichtlich, können zweckmäßig die Löcher 93 in linienmäßig jeweils gegeneinander versetzter Anordnung vorgesehen sein.

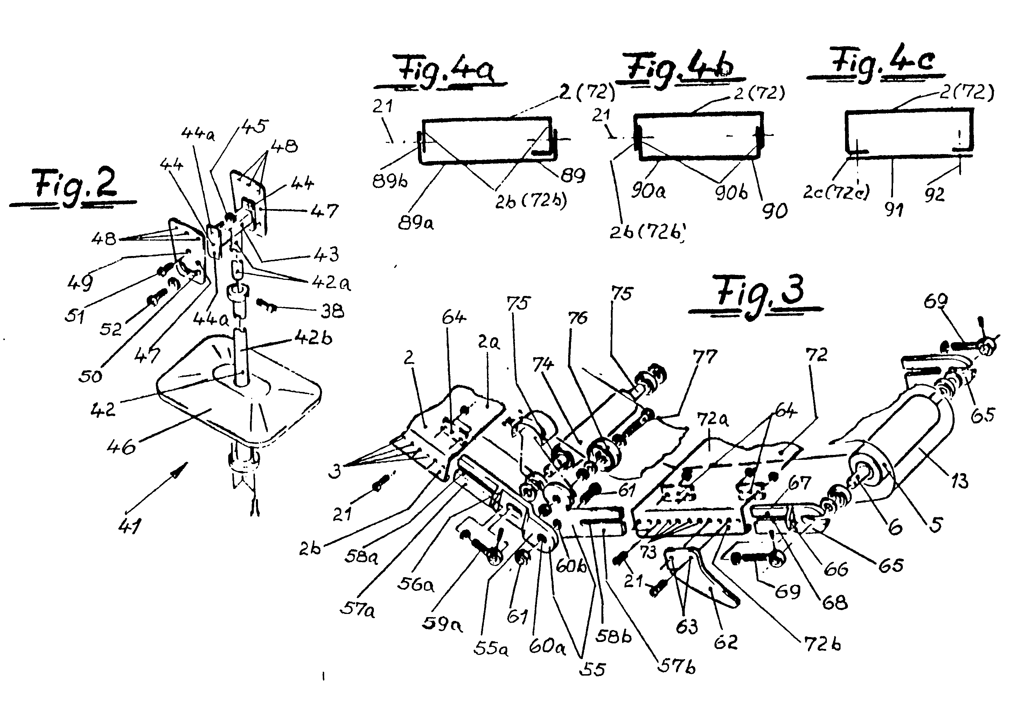

Wie durch Figur 2 verdeutlicht, kann statt der beiden Standfüße 31 gem. Figur 1 auch ein einziger die gesamte Bandfördervorrichtung tragender Standfuß 41 vorgesehen sein. Dieser weist einen einzigen mittigen Standpfeiler 42 auf, der mit seinem unteren Ende teleskopisch geführt und über eine Feststelleinrichtung 38 in einem Standschemel 46 höhenverstellbar geführt ist und an seinem schemelfernen Ende einen Querholm 43 trägt, an dessen beiden Stirnenden jeweils beispielsweise mittels Schweißens ein Anschlußflansch 44 festgelegt ist, wobei beide Anschlußflansche einen solchen Abstand zueinander haben, der dem Abstandsmaß zwischen den Innenflächen oder den Außenflächen zweier gegenüberliegender Seitenstege 2b des Tragrahmens 2 entspricht. Der Standpfeiler 42 ist, wie ersichtlich, aus den beiden Teilstücken 42a, 42b gebildet, von denen das letztere fest mit dem Standschemel 46 verbunden ist, der im übrigen auch verfahrbar ausgebildet sein kann, obgleich dies nicht näher dargestellt ist. Die Anschlußflansche 44 weisen jeweils übereinander angeordnet zwei Flanschlöcher 44a auf. Kommt es auf eine Veränderung der Förderneigung der Bandfördervorrichtung nicht an, so können die Löcher 44a in den Anschlußflanschen 54 auch in der Rasteranordnung der Löcher 3 der Seitenstege 2b des Tragrahmens 2 entsprechender Anordnung und mit etwa gleicher Größe ausgeführt sein, so daß der Standfuß über die Anschlußflansche 44 des Querholms 43 seines Standpfeilers 42 unmittelbar an den Seitenstegen 2b des Tragrahmens 2 angeschlossen werden kann. Ist hingegen eine Verstellbarkeit der Förderneigung erwünscht, so werden die Flanschlöcher 44a in dargestellter Anordnung mit einer dem Mittelpunktsabstand des kreisbogenförmigen Schlitzes 50 zu seinem Mittelpunktsloch 49 im dargestellten Schwenkflansch 47 entsprechender Anordnung ausgeführt, und der Anschluß des Standfußes 41 erfolgt über die Anschlußflansche 44 mittels Schraubelementen 45 in der gleichen Weise, wie bereits im Zusammenhange mit Figur 1 bezüglich des Anschlusses der Anschlußflansche 37 der Standfüße 31 beschrieben.

In Figur 3 ist die eine Seite des Aufgabebereiches, die Knickstelle (Umlenkstelle) und ein Teil des sich an diese förderstromabwärts anschließenden Hauptbereiches der hier als Knickbandförderer ausgebildeten Bandfördervorrichtung 1 gezeigt. Ein solcher Knickbandförderer weist naturgemäß zwei Tragrahmen auf, von denen jeweils einer auf einer Seite der durch eine Umlenkeinrichtung 70 für Ober- und Untertrum des Fördermittels 13 bestimmten Knickstelle angeordnet ist. Der Tragrahmen 2 weist ebenso wie der förderstromaufwärts von der Umlenkeinrichtung 70 angeordnete weitere Tragrahmen 72 C-Profil auf, wie dargestellt. Beide Profile weisen in ihren Seitenstegen 2b bzw. 72b jeweils in bereits beschriebener linienrastermäßiger Anordnung vorgesehene Löcher 3 bzw. 73 auf.

An der rechts außen gezeigten Aufgabestelle für das Fördergut ist wiederum die sich praktisch über der ganzen Breite des durch den weiteren Tragrahmen 72 hier gebildeten Förderbandrahmens durchgehend erstreckende Aufgabewalze 5 mit ihrer Achse 6 in einem Paar von Walzenträgern 65 gehaltert, von denen jeder auf seiner aufgabewalzenwellen- bzw. -achsenfernen Seite ein Endstück 67 aufweist, das so konstruiert ist, daß es in den Profilhohlraum des zugeordneten weiteren Tragrahmens 72 einführbar ist. Die Wellenträger 65 weisen ferner jeweils eine Nase 66 mit einem zwar dargestellten, nicht jedoch näher bezeichneten Gewindeloch auf, in das ein Gewindestift 63 einer durch diesen und die Nase 66 mit ihrem Gewindeloch gebildeten Spanneinrichtung für die Aufgabewalzenachse 6 einschraubbar und mittels einer zwar dargestellten, nicht jedoch näher bezeichneten Kontermutter in einer beliebigen gewünschten Arbeitsstellung festlegbar ist. Dabei kann sich der Gewindestift mit seinem freien Ende unmittelbar oder aber unter Zwischenschaltung eines gegenüber ihm frei drehbaren Druckstückes (nicht gezeigt) an der Aufgabewalzenachse 6 in Anlage befinden. Beim dargestellten Ausführungsbeispiel weist der Gewindesstift 69 an seinem freien Ende einen fest an ihm angeordneten Aufnahmering für die Aufgabewalzenachse 6, die sich in diesem drehen kann oder aber, sofern die gesamte Aufgabewalzenanordnung 5, 6 als Steckachsanordnung ausgebildet ist, mittels eine zwar dargestellten, nicht jedoch näher bezeichneten Madenschraube, die den Aufnahmering über eine Gewindebohrung in diesem durchdringt, an diesem drehfest festgelegt sein kann. Beim dargestellten Ausführungsbeispiel ist das Loch in der Nase 66 des Walzenträgers 65 nicht als Gewindeloch, sondern als Durchsteckloch für den Gewindestift 69 ausgebildet, der in dieses einfach eingesteckt wird. Der Achsabstand der Aufgabewalzenachse zum Stirnende des zugeordneten Tragrahmens 72, an dem die Nase 66 des in dessen Profilhohlraum mit seinem Endstück 67 eingeführten Walzenträgers 65 sich in Anlage befindet, wird durch Betätigung der zwar dargestellten, nicht jedoch näher bezeichneten Stellmutter des Gewindestiftes 69 in beliebiger gewünschter Arbeitsstellung eingestgellt und fixiert. Zur Festlegung der Walzenträger 65 an den zugeordneten Seitenstegen 72b des weiteren Tragrahmens 72 weisen die Endstücke 67 der Walzenträger 65 jeweils einen symmetrisch zur Rasterlinie m (Mittellinie des Seitensteges 72b des Tragrahmens 72 und vorzugsweise auch der Endstücke 67 der Walzenträger 15) angeordneten Sackschlitz 68 auf. Die Fixierung erfolgt dann mittels mindestens zweier durch Löcher 73 in den Seitenstegen 72b des weiteren Tragrahmens 72 und den Sackschlitz 68 des in dessen Profilhohlraum eingeführten Walzenträgers 65 hindurchgreifender Verschraubungen 21 erforderlichenfalls unter Zuhilfenahme einer Klemmplatte 64, wobei auch hier diese Schraubelemente 21 mit Vorzug aus einem Schraubbolzen und Mutter mit Unterlegscheibe sowie gegebenenfalls einer Kontermutter bestehen können. wie dargestellt, kann dabei gleichzeitig auch ein Stützhorn 62 mit festgelegt werden, das längs seines oberen Randes mindestens zwei Löcher 63 etwa gleicher Größe wie der der Löcher 3 der Seitenstege 73b des weiteren Tragrahmens 72 in der Rasteranordnung derselben entsprechender Anordnung aufweist. Andererseits kann ein solches Stützhorn, das im übrigen bevorzugt paarweise an beiden gegenüberliegenden Seitenstegen 72b des Tragrahmens 72 vorgesehen wird, auch an anderer Stelle und unabhänig von der Fixierung des Walzenträgers 65 am Tragrahmen 72 festgelegt werden.

Die Halterung der Abgabewalze 15 mit ihrer Antriebswelle 16 kann in der Ausführung getroffen sein, wie diese in Figur 1 dargestellt und vorstehend erläutert worden ist, oder aber in der Halterung der Aufgabewalze 5 im Ausführungsbeispiel gemäß Figur 3 ähnlicher Weise. Umgekehrt hätte auch bei der Ausführungsform gemäß Figur 3 die Halterung der Aufgabewalze 5 in der gleichen Weise ausgebildet sein können, wie dies für die entsprechende Aufgabewalze 5 bei der Ausführungsform gem. Figur 1 dargestellt und vorstehend erläutert worden ist.

Der aufgabestellenseitige, im wesentlichen durch den Tragrahmen 72 gebildete Zweig des Knickbandförderers und der dessen Hauptzweig bildende abgabestellenseitig Ast desselben, der im wesentlichen durch den Tragrahmen 2 gebilet wird, sind miteinander über paarweise vorgesehene Lagerträger 55 der als Ganzes mit 70 bezeichneten Umlenkeinrichtung des Knickbandförderers verbunden, die jeweils zwei Schenkel 55a, 55b aufweisen und mittels einer jeweils durch miteinander fluchtende Löcher 60a, 60b in diesen gemeinsam hindurchgreifender Verschraubungen 61 in ihrer winkelmäßigen Zuordnung zueinander veränderbar und in der gewünschten Winkelstellung zueinander festgelegt haltbar sind. Beide Schenkel 55a, 55b eines jeden Lagerträgers 55 weisen jeweils ein in den Profilhohlraum des benachbarten Tragrahmens 2 bzw. 72 einführbares Endstück 57a bzw. 57b mit jeweils einem sich symmetrisch zur Rasterlinie m des zugeordneten Tragrahmens, nämlich des Tragrahmens 2 einerseits und des weiteren Tragrahmens 72 andererseits, erstreckenden Sackschlitz 58a bzw. 58b auf, das in bereits im Zusammenhang mit den Walzenträgern der Aufgabewalze 5 gemäß Figur 3 beschriebener Weise mittels Verschraubungen 21 erforderlichenfalls unter Zuhilfenahme von Klemmplatten 64 am jeweils zugeordneten Seitensteg 2b bzw. 72b des zugeordneten Tragrahmens 2 bzw. 72 fixiert werden kann.

Die aufgabewalzenseitigen Schenkel 55b weisen jeweils eine Lagerung für Niederhalterollen 76 für das Obertrum des Fördermittels 13 in Form von durch Schraubbolzen 77 gebildeten Achsen auf, die mit einem sich nach oben erstreckenden Lappen dieses Schenkels 55b verschraubt sind.

Die anderen Schenkel 55a lagern in der gleichen Weise, wie die Aufgbewalze 5 in ihren Walzenträgern 65 gelagert ist, die Achse 75 einer Umlenkwalze 74 für das Untertrum des Fördermittels 13. In diesem Zusammenhang ist hervorzuheben, daß auch die Funktionsweise der durch eine Nase 56a am Schenkel 55a und das Schraubstück 59a gebildeten Spanneinrichtung der Umlenkeinrichtung 70 für die Umlenkwalze 74 die gleiche ist wie die der Spanneinrichtung 66, 69 für die Aufgabewalze 5.

In Figur 4 sind verchiedene Möglichkeiten dargestellt, insbesondere im Interesse der Vermeidung von Unfallgefahren die Unterseite des durch den jeweiligen Tragrahmen 2 bzw. 72 umgrenzten Hohlraum, in welchem das Fördermittel läuft und gegebenenfalls durch Andrück- bzw. Führungswalzen geführt ist, gegen unbeabsichtigten Zugriff zu sichern, wobei sich zwangsweise der weitere Vorteil zusätzlicher Aussteifung des Tragrahmens durch die zur Abdeckung Verwendung findenden Bauteile ergibt.

So ist in Figur 4a eine U-förmige Blechrinne 89 gezeigt, deren von ihrem Bodensteg 89a sich seitlich wegerstreckende Seiten- bzw. Randstege in einem solchen Abstand zueinander angeordnet sind, daß sie mit ihren innenliegenden Oberflächen gerade die Seitenstege 2b bzw. 72b des Tragrahmens 2 bzw. 72 übergreifen. Diese Blechrinne(n) 89 kann bzw. können dann in bereits vielfach beschriebener Weise mittels Schraubelementen 21 mit dem jeweiligen Tragrahmen 2 bzw. 72 verschraubt werden, die mit Vorzug wiederum aus Schraubbolzen, Unterlegscheibe mit Mutter und gegebenenfalls Kontermutter bestehen können.

In Figur 4a ist weiterhin angedeutet, daß diese Art der Abdeckung sowohl für Tragrahmen 2 bzw. 72 Verwendung finden kann, die als U-Profil ausgebildet sind, wie auf der linken Seite der Darstellung ersichtlich, als auch für solche, die als C-Profil ausgebildet sind, wie auf der rechten Seite der Darstellung angedeutet.

In Figur 4b ist eine der linken Variante von Figur 4a entsprechende Abdeckungsausführung wiedergegeben, bei welcher jedoch der Abstand der hochstehenden Seiten- bzw. Randstege 90b der U-förmigen Blechrinne 90 so gewählt ist, daß deren Außenflächen gerade in den zwischen den beiden Seitenstegen 2b bzw. 72b des betreffenden Tragrahmens 2 bzw. 72 gebildeten lichten Raum einschiebbar sind. Diese Ausführungsform eignet sich ersichtlich allerdings nur für Tragrahmen 2 bzw. 72 in Ausführung als U-Profil. Die Festlegung der Blechrinne 90 am jeweiligen Tragrahmen 2 bzw. 72 erfolgt in der gleichen Weise mittels Schraubelementen 21, wie vorstehend bereits im Zusammenhang mit Figur 4a beschrieben.

In Figur 4c schließlich ist eine weitere Abdeckungsart in Form eines einfachen Bleches 91 verdeutlicht, die sich ersichtlich allerdings nur für Tragrahmen 2 bzw. 72 in Ausführung als C-Profil eignet, weill man nicht mit zusätzlichen Tragwinkeln arbeitet. Die Festlegung des bzw. der Abdeckbleche(s) 91 am jeweiligen Tragrahmen 2 bzw. 72 erfolgt hier durch entsprechende Verschraubungen 92 von unten her mit den Randstegen 2c bzw. 72c des jeweiligen Tragrahmens 2 bzw. 72, wobei diese Verschraubungen 92 lediglich durch ihre Mittellinien angedeutet sind. Auch hier wird durch das bzw. die Abdeckblech(e) 91 gleichzeitig auch eine nicht unerwünschte Versteifungswirkung für den gesamten Förderbandrahmen miterbracht.

Hervorzuheben ist noch, daß zweckmäßig die Löcher in den Abdeckelementen 89, 90 bzw. 91, über welche diese mittels durch sie hindurchgreifender Verschraubungen mit entweder einem Seitensteg 2b bzw. 72b eines als U- oder als C-Profil ausgebildeten Tragrahmens 2 bzw. 72b oder aber den Randstegen 2c bzw. 72c eines als C-Profil ausgebildeten Tragrahmens 2 bzw. 72 verschraubbar sind, als auf einer zur Rasterlinie m der Löcher 3 in den Seitenstegen 2b bzw. 72b der Tragrahmen 2 bzw. 72 parallelen Linie liegende und in Richtung derselben ausgerichtete Langlöcher ausgebildet sein können. Hierdurch wird es möglich, in höchst einfacher und bequemer Weise schnell etwa erforderliche Nachjustierungen zur Verringerung oder Schließung eines sonst eine Unfallgefahr darstellenden Zugriffsspaltes zur Unterseite des Tragrahmens 2 bzw. 72 zu bewirken.

Abschließend ist noch hervorzuheben, daß die Tragrahmen sich nicht über die gesamte Länge der Bandfördervorrichtung 1 nach der Erfindung zu erstrecken brauchen, daß vielmehr deren Förderbandrahmen auch aus einer Vielzahl solcher Tragrahmen zusammengesetzt sein kann, die dann in Reihe hintereinander angeordnet und entweder über in deren Profilhohlraum die Stoßstelle zwischen zwei solcher Paare von Tragrahmen 2 bzw. 72 überbrückend eingreifende Verbindungslaschen, als welche im übrigen auch die Anschlußflansche eines Querholms dienen können, wie dieser dann in Figur 1 im Bereich der Aufgabestelle dargestellt und mit 94 bezeichnet ist, miteinander verbunden werden können, oder aber mit Vorzug durch eine in bereits beschriebener Weise als eine solche Stoßstelle zweier Tragrahmen 2 bzw. 72 überbrückend eingesetzte U-förmige Blechrinne 89 bzw. 90 oder ein eine solche Stoßstelle überbrückend angeordnetes Abdeckblech 91 in Verbindung mit jeweils zwei benachbarte Seitenstege 2b bzw. 72b zweier hintereinander angeordneter Tragrahmen 2 bzw. 72 übergreifenden Verbindungslaschen.

Obgleich die Erfindung vorstehend lediglich anhand einiger bevorzugter Ausführungsbeispiele dargestellt und erläutert ist, ist sie nicht auf diese beschränkt.

## Patentansprüche

1. Bandfördervorrichtung mit einem Fördermittel in Form eines oder mehrerer Bänder oder Riemen oder Scharnierbänder, insbesondere Kleinbandförderer, mit einem durch ein mit einem Bodensteg (2a) gleichzeitig als Gleitblech für das Obertrum des Fördermittels (13) dienendes selbsttragendes U- oder C-Profil gebildeten Tragrahmen (2) für dieses, mit mindestens einem Standfuß, mit einer Antriebswalze und einer Umlenkwalze und mit einem Antriebsmotor für die Antriebswalze, dadurch gekennzeichnet, daß dessen sich von seinen Bodenstegen (2a) gleichsinnig etwa normal wegerstreckende Seitenstege (2b) jeweils eine Vielzahl von auf einer bodenstegparallelen Linie (m), vorzugsweise der Mittellinie des jeweiligen Seitenstegs (2b), linienrastermäßig angeordneten Löchern (3) gleichen Lochabstandes und zumindest in der oder quer zur Richtung dieser Rasterlinie (m), gleicher Lochgröße aufweisen und daß ein Lagerschild (23) für den Antriebsmotor (26), Walzenträgerpaare (7, 17, 23) je für die Umlenkwalze (5) und die Antriebswalze (15) und der Standfuß (31, 41) mittels in der Rasteranordnung der Löcher (13) des Tragrahmens (2) entsprechender Anordnung vorgesehene Löcher (24) in diesen Bauteilen durchgreifende Schraubelemente (21) mit den Seitenstegen (2b) des Tragrahmens (2) verschraubt sind, wobei ein Walzenträger (23) eines Walzenträgerpaares gleichzeitig als Lagerschild für den Antriebsmotor (26) ausgebildet ist.

2. Bandfördervorrichtung nach Anspruch 1, dadurch gekennzeichnet, daß der vorzugsweise als Getriebemotor ausgebildete Antriebsmotor (26) an einem Walzenträger (23) in eine Direktkupplung seiner Abtriebswelle (27) mit der Welle (16) einer oder mehrerer Antriebswalze(n) (15) oder eine Drehmomentenübertragung über einen kinematischen Antriebskettenzug in Form eines Riemen- oder Kettentriebes (29) ermöglichender Stellung gehalten ist, wobei der Walzenträger (23) mittels mindestens zwei in der Rasteranordnung der Löcher (13) des Tragrahmens (2) entsprechender Anordnung vorgesehene Löcher (24) in ihm durchgreifender Schraubelemente (21) mit dem Tragrahmen (2) verschraubt ist.

3. Bandfördervorrichtung nach Anspruch 1 oder 2, dadurch gekennzeichnet, daß die Umlenkwalze(n) (5) und/oder die Antriebswalze(n) (15) jeweils in einem Paar von Walzenträgeren (65) gehalten ist bzw. sind, die jeweils mit einem Endstück (67) von der Stirnseite des Tragrahmens (2) her in dessen Profilhohlraum einführbar und mittels einer Spanneinrichtung (66, 69) bezüglich des Achsabstandes der von ihnen abgestützten Antriebswalze (15) bzw. Umlenkwalze (5) relativ zur Stirnfläche des Tragrahmens (2) verstellbar und in Arbeitsstellung festlegbar sind.

4. Bandfördervorrichtung nach Anspruch 3, dadurch gekennzeichnet, daß die in den Profilhohlraum des Tragrahmens (2) einführbaren Walzenträger (65) in ihrem Endstück (67) jeweils einen zur Rasterlinie (m) der Löcher (3) des zugeordneten Seitensteges (2b) des Tragrahmens (2) symmetrischen und zum freien Ende des Endstückes (67) offenen Sackschlitz (68) aufweisen und daß die Spanneinrichtungen (66, 69) jeweils eine Nase (66) am Walzenträger (65) und einen sich einerseits gegenüber dieser oder einer Druckfläche des Tragrahmens (2) und andererseits gegenüber der zu haltenden Walzenwelle (15) bzw. -achse (5) abstützenden Spannstift (69) sowie mindestens zwei Verschraubungen (21) mit jeweils einer oder einer gemeinsamen das Endstück (67) hintergreifenden Klemmplatte (64) aufweist, mittels derer der Walzenträger (65) am Tragrahmen (2) festlegbar ist.

5. Bandfördervorrichtung nach einem der vorhergehenden Ansprüche, dadurch gekennzeichnet, daß mindestens eine Umlenkwalze für das Untertrum (40) bzw. ein Satz derselben, vorzugsweise ein Paar solcher Umlenkwalzen (40) bzw. Sätze derselben, vorgesehen ist, von denen jede(r) in einem Paar von Lagerflanschen (53) gehalten ist, die jeweils mittels mindestens zwei in der Rasteranordnung der Löcher (3) des Tragrahmens (2) entsprechender Anordnung in ihnen vorgesehene Löcher (54) durchgreifender Schraubelemente (21) mit einem der beiden gegenüberliegenden Seitenstege (2b) des Tragrahmens (2) verschraubt sind.

6. Bandfördervorrichtung nach Anspruch 5, dadurch gekennzeichnet, daß mindestens eine Umlenkwalze (40) bzw. ein Satz derselben der Antriebswalze (z. B. 15) bzw. dem Satz derselben vorgeordnet und/oder mindestens eine Umlenkwalze (40) bzw. ein Satz derselben der Antriebswalze (z. B. 15) bzw. dem Satz derselben nachgeordnet ist und daß zumindest eine dieser Umlenkwalzen (40) bzw. einer der Sätze derselben von dem Paar von Lagerträgern (z. B. 17) bzw. Lagerschilden (z. B. 23) der Antriebswalzenwelle (z. B. 16) getragen ist.

7. Bandfördervorrichtung nach einem der vorhergehenden Ansprüche in Ausführung als Knickbandförderer, gekennzeichnet durch einen durch ein weiteres gleichfalls in seinem Bodensteg (72a) gleichzeitig als Gleitblech für das Obertrum des Fördermittels (13) dienendes selbsttragendes U- oder C-Profil gebildeten Tragrahmen (72), dessen sich von seinem Bodensteg (72a) gleichsinnig etwa normal wegerstreckende Seitenstege (72b) jeweils eine Vielzahl von auf einer bodenstegparallelen Linie, vorzugsweise der Mittellinie des jeweiligen Seitensteges, linienrastermäßig angeordneten Löchern (30) gleichen Lochabstandes und zumindest in der oder quer zur Richtung dieser Rasterlinie gleicher Lochgröße aufweisen, und durch eine Umlenkeinrichtung (70) für das Fördermittel (13) mit jeweils einem Paar von Lagerträgern (55) für die Achsen (75 bzw. 77) einer oder mehrerer Umlenkwalze(n) (74) für das Unter- oder Obertrum des Fördermittels (13) und einer oder mehrerer Niederhalterolle(n) (76) für das andere Trum desselben, die jeweils zwei Schenkel (55a, 55b) aufweisen, von denen jeweils einer mittels mindestens zwei der Löcher (3) eines Seitensteges (2b) des Tragrahmens (2) durchgreifender Schraubelemente (21) mit diesem und der andere mittels mindestens zwei der Löcher (73) eines Seitensteges (72b) des weiteren Tragrahmens (72) durchgreifender Schraubelemente (21) mit diesem verschraubt ist.

8. Bandfördervorrichtung nach Anspruch 7, dadurch gekennzeichnet, daß jeweils der eine Schenkel (55a) eines jeden Lagerträgers (55) eine Lagerungseinrichtung für die Achse (75) der Umlenkwalze(n) (74) und der andere Schenkel (55b) eines jeden Lagerträgers (55) eine Lagerungseinrichtung für die Achse (77) der Niederhalterolle(n) (76) aufweist.

9. Bandfördervorrichtung nach Anspruch 7 oder 8, dadurch gekennzeichnet, daß die Schenkel (55a, 55b) beider Lagerträger (55) der Umlenkeinrichtung (70) in ihrer Winkelstellung zueinander veränderbar sind.

10. Bandfördervorrichtung nach einem der Ansprüche 7 bis 9, dadurch gekennzeichnet, daß jeweils zumindest einer der Schenkel (55a bzw. 55b) der Lagerträger (55) mindestens zwei in der Rasteranordnung der Löcher (3 bzw. 73) der Seitenstege (2b bzw. 72b) des zugeordneten Tragrahmens (2 bzw. 72) entsprechender Anordnung vorgesehene Löcher aufweist und mittels diese durchgreifender Schraubelemente (21) mit dem zugeordneten Seitensteg (2b bzw. 72b) des Tragrahmens (2) bzw. des weiteren Tragrahmens (72) verschraubt ist.

11. Bandfördervorrichtung nach einem der Ansprüche 7 bis 10, dadurch gekennzeichnet, daß zumindest ein Paar von gegenüberliegenden Schenkeln (55a bzw. 55b) der Lagerträger (55) jeweils ein von der Stirnseite des Tragrahmens (2) oder des weiteren Tragrahmens (72) her in dessen Profilhohlraum einführbares Endstück (57a bzw. 57b) aufweist und daß jeweils eine Spanneinrichtung (z. B. 56a, 59a) vorgesehen ist, mittels derer der jeweilige Schenkel (z. B. 55a) bezüglich des Achsabstandes der von ihm abgestützten Welle(n) bzw. Achse(n) (75) relativ zur Stirnfläche des zugeordneten Tragrahmens (2) bzw. weiteren Tragrahmens (72) verstellbar und in Arbeitsstellung festlegbar ist.

12. Bandfördervorrichtung nach Anspruch 11, dadurch gekennzeichnet, daß die in einen Profilhohlraum des Tragrahmens (2) oder des weiteren Tragrahmens (72) einführbaren Schenkel (55a bzw. 55b) der Lagerträger (55) in ihrem Endstück (57a bzw. 57b) jeweils einen zur Rasterlinie (m) der Löcher (3 bzw. 73) des zugeordneten Seitensteges (2b bzw. 72b) des Tragrahmens (2) bzw. des weiteren Tragrahmens (72) symmetrischen und zum freien Ende des Endstückes (57a bzw. 57b) offenen Sackschlitz (58a bzw. 58b) aufweisen und daß die Spanneinrichtung (z. B. 56a, 59a) jeweils eine Nase (z. B. 56a) am zugeordneten Schenkel (z. B. 55a) des Lagerträgers (55) und einen sich einerseits gegenüber dieser oder einer Druckfläche des Tragrahmens (z. B. 2) bzw. des weiteren Tragrahmens (72) und andererseits gegenüber der zu haltenden Walzen- bzw. Rollenachse (z. B. 75) abstützenden Spannstift (z. B. 59a) sowie mindestens zwei Verschraubungen (21) mit jeweils einer oder einer gemeinsamen das Endstück (z. B. 57a) hintergreifenden Klemmplatte (64) aufweist, mittels derer der betreffende Schenkel (z. B. 55a) am Tragrahmen (2) bzw. am weiteren Tragrahmen (72) festlegbar ist.

13. Bandfördervorrichtung nach einem der Ansprüche 2 und 5 bis 10, dadurch gekennzeichnet, daß die Befestigungslöcher (24 bzw. 8 bzw. 18 bzw. 54) des Lagerschildes (23) für den Antriebsmotor (26) und/oder der Walzenträger (7 bzw. 17) der Aufgabewalze(n) (5) und/oder der Abgabewalze(n) (15) und/oder der Lagerschilde der Antriebswalze(n) und/oder der Lagerflansche (53) der Umlenkwalze(n) (40) und/oder der Schenkel (55a bzw. 55b) der Lagerträger (55) der Umlenkeinrichtung (70) jeweils als sich in Richtung der Rasterlinie (m) der Löcher (3 bzw. 73) in den Seitenstegen (2b bzw. 72b) des Haupttragrahmens (2) bzw. des weiteren Tragrahmens (72) erstreckende Langlöcher ausgebildet sind, wobei vorzugsweise jeweils eine Spanneinrichtung (19, 19a, 22) vorgesehen ist, mittels derer der betreffende Lagerschild (23) bzw. Walzenträger (5 bzw. 15) bzw. Lagerflansch (53) bzw. Lagerträgerschenkel (55a bzw. 55b) formschlüssig stufenlos in Richtung dieser Rasterlinie (m) verstellbar und in Arbeitsstellung festlegbar ist.

14. Bandfördervorrichtung nach Anspruch 13 mit Spanneinrichtungen für Lagerschild(e) und /oder Walzenträger und/oder Lagerflansch(e) und/oder Lagerträgerschenkel der Umlenkeinrichtung, dadurch gekennzeichnet, daß die Spanneinrichtung eine den zugeordneten Lagerschild (23) bzw. Walzenträger (5 bzw. 15) bzw. Lagerflansch (53) bzw. Lagerträgerschenkel (55a bzw. 55b) auf seiner Außenseite übergreifende Widerlagerleiste (9 bzw. 19) und eine den zugeordneten Seitensteg (2b bzw. 72b) des Tragrahmens (2) bzw. des weiteren Tragrahmens (72) auf seiner Innenseite übergreifende Klemmplatte (64) aufweist, die beide jeweils mindestens zwei in der Rasteranordnung der Löcher (3 bzw. 73) des zugeordneten Tragrahmens (2 bzw. 72) entsprechender Anordnung vorgesehene Löcher (10 bzw. 20) aufweisen und mittels durch diese Löcher (10 bzw. 20) und mit diesen fluchtende Löcher (3 bzw. 73) des zugeordneten Seitensteges (2b bzw. 72b) des Tragrahmens (2) bzw. des weiteren Tragrahmens (72) gemeinsam hindurchgreifender Schraubelemente (2) an diesem Seitensteg (2b bzw. 72b) des Tragrahmens (2) bzw. des weiteren Tragrahmens (72) unverschieblich festgelegt sind, wobei die Widerlagerleiste (9 bzw. 19) an ihrem walzenfernen Ende einen Widerlagerflansch (9a bzw. 19a) aufweist, gegenüber dem sich eine mit ihrem anderen Ende an einer Druckfläche am zugeordneten Lagerschild (23) bzw. Walzenträger (5 bzw. 15) bzw. Lagerflansch (53) bzw. Lagerträgerschenkel (55a bzw. 55b), vorzugsweise einer Stirnfläche desselben, in Anlage befindliche Verschraubung (12 bzw. 22) abstützt.

15. Bandfördervorrichtung nach Anspruch 14, dadurch gekennzeichnet, daß die Spannverschraubung durch einen in ein Gewindeloch im Widerlagerflansch (9a bzw. 19a) der Widerlagerleiste (9 bzw. 19) eingeschraubten Gewindestift (22) gebildet ist.

16. Bandfördervorrichtung nach einem der vorhergehenden Ansprüche, gekennzeichnet durch mindestens ein Paar von vorzugsweise über Querholme (33) miteinander verbundenen Standpfeilern (32), die auf ihrer einen Seite jeweils eine Einrichtung zur ortsfesten Festlegung beispielsweise in Form einer Fußplatte (36) und auf ihrer anderen Seite jeweils einen Anschlußflansch (37) aufweisen, über den sie mit einem Seitensteg (2b bzw. 72b) des Tragrahmens (2) oder eines etwaigen weiteren Tragrahmens (72) verschraubt sind.

17. Bandfördervorrichtung nach einem der vorhergehenden Ansprüche, gekennzeichnet durch mindestens einen etwa mittig zumindest zum Hauptragrahmen angeordneten Tragpfeiler (42), vorzugsweise eine der Zahl der Standfüße (41) entsprechende Anzahl solcher Tragpfeiler (42), der bzw. die jeweils an seinem bzw. ihrem oberen Ende eine einen Querholm (43), der seinerseits an seinen Enden jeweils einen Anschlußflansch (44) aufweist, über den er mit einem Seitensteg (2b bzw. 72b) des Tragrahmens (2) oder eines etwaigen weiteren Tragrahmens (72) verschraubt ist, und an seinem bzw. ihrem querholmfernen Ende jeweils eine Einrichtung (46) zur ortsfesten Festlegung aufweist bzw. aufweisen.

18. Bandfördervorrichtung nach Anspruch 17, dadurch gekennzeichnet, daß die Einrichtung zur ortsfesten Festlegung als vorzugsweise relativ zum Querholm (43) höhenverstellbare Fußplatte (46) ausgebildet ist.

19. Bandfördervorrichtung nach Anspruch 17, dadurch gekennzeichnet, daß die Einrichtung zur ortsfesten Festlegung als vorzugswseise verfahrbarer und/oder relativ zum Querholm (43) höhenverstellbarer Standschemel ausgebildet ist.

20. Bandfördervorrichtung nach einem der Ansprüche 16 bis 19, dadurch gekennzeichnet, daß die Standpfeiler (32) mindestens eines Paares von Standpfeilern (32) oder der bzw. mindestens einer der einzeln vorgesehene(n) Standpfeiler (42) jeweils aus wenigstens zwei teleskopisch ineinander schiebbaren und mittels einer Feststelleinrichtung (71 bzw. 38) in gewünschter Arbeitsrichtung fixierbaren Teilstücken (32a, 32b, 32c bzw. 42a, 42b) gebildet ist bzw. sind.

21. Bandfördervorrichtung nach einem der Ansprüche 16 bis 20, dadurch gekennzeichnet, daß die Anschlußflanschen (37 bzw. 44) jeweils mittels mindestens zwei in der Rasteranordnung der Löcher (3 bzw. 73) der Seitenstege (2b bzw. 72b) von Tragrahmen (2) oder etwaigem weiterem Tragrahmen (72) entsprechender Anordnung in ihnen vorgesehene Löcher durchgreifender Schraubelemente (21) mit dem zugeordneten Tragrahmen (2 bzw. 72) verschraubt sind.

22. Bandfördervorrichtung nach einem der Ansprüche 16 bis 20, dadurch gekennzeichnet, daß mindestens ein Paar, vorzugsweise eine der Zahl der Standfüße (31 bzw. 41) entsprechende Zahl von Paaren von Schwenkflanschen (47) vorgeshen ist, die jeweils mittels mindestens zwei in der Rasteranordnung der Löcher (3 bzw. 73) der Seitenstege (2b bzw. 72b) von Tragrahmen (2) oder etwaigem weiterem Tragrahmen (72) entsprechender Anordnung in ihnen vorgesehene Löcher (48) durchgreifender Schraubelemente (21) mit dem zugeordneten Tragrahmen (2 bzw. 72) verschraubt sind und einen zu einem dieser Löcher (48) oder vorzugsweise zu einem weiteren Loch (49) konzentrischen kreisbogenförmigen Längsschlitz (50) aufweisen, und daß die zugeordneten Anschlußflansche (37 bzw. 44) der einzeln oder paarweise vorgesehenen Standpfeiler (32 bzw. 42) jeweils ein mit Neigung gegenüber der Anordnung der Löcher (3 bzw. 73) des Tragrahmens (2 bzw. 72) in einem dem Mittelpunktsabstand von kreisbogenförmigem Schlitz (50) und dessen Mittelpunktsloch (48 bzw. 49) im zugeordneten Schwenkflansch (47) entsprechenden Abstand eingebrachtes Paar von Löchern (37a bzw. 44a) aufweist, über die sie jeweils mittels durch sie und den kreisbogenförmigen Schlitz (50) bzw. dessen Mittelpunktsloch (48 bzw. 49) im zugeordneten Schwenkflansch (47) hindurchgreifender Verschraubungen (51, 52) in gewünschter Arbeitsstellung an diesem fixierbar sind.

23. Bandfördervorrichtung nach einem der vorhergehenden Ansprüche, dadurch gekennzeichnet, daß an einem der Seitenstege (2b) des Tragrahmens (2) ein Tragflansch (78) mittels durch wenigstens zwei von in der Rasteranordnung der Löcher (3) im zugeordneten Seitensteg (2b) des Tragrahmens (2) entsprechender Anordnung in ihm vorgesehenen Löchern (79) hindurchgreifender Schraubelemente (21) am Tragrahmen (2) festgelegt ist, an dem ein Steuerpult (82) für den Antriebsmotor (26) befestigt ist.

24. Bandfördervorrichtung nach einem der vorhergehenden Ansprüche, dadurch gekennzeichnet, daß zumindest längs eines Seitensteges (2b bzw. 72b) des Tragrahmens (2 bzw. 72), vorzugsweise längs beider Seitenstege (2b bzw. 72b) des Tragrahmens (2 bzw. 72), vorzugsweise längs beider Seitenstege (2b bzw. 72b) desselben, oberhalb des Obertrums des Fördermittels (13) zumindest eine Seitenführungsleiste (83) für das Fördergut gehalten ist, indem sie jeweils an mindestens einem Tragflansch (84) festgelegt ist, der mittels wenigstens zwei in der Rasteranordnung der Löcher (3 bzw. 73) im zugeordneten Seitensteg (2b bzw. 72b) des zugeordneten Tragrahmens (2 bzw. 72) entsprechender Anordnung im Tragflansch (84) vorgesehene Löcher (85) durchgreifender Schraubelemente (21) mit dem Tragrahmen (2 bzw. 72) verschraubt ist.

25. Bandfördervorrichtung nach Anspruch 24, dadurch gekennzeichnet, daß die Seitenführungsleiste (83) als C-Profil ausgebildet und mittels einer im Bereich eines jeden Tragflansches (84) in seinem Profilhohlraum seine Randflansche hintergreifend eingeführten Klemmplatte (87) am Tragflansch (84) schnell lösbar festgelegt ist, indem über eine in die Klemmplatte (87) eingreifende Verschraubung (88) diese und die Randstege der Seitenführungsleiste (87) gegen einen Anschlaglappen (84a) des Tragflansches (84) gezogen werden.

26. Bandfördervorrichtung nach einem der vorhergehenden Ansprüche, dadurch gekennzeichnet, daß mindestens eine U-förmige Blechrinne (89) bzw. (90) mit von ihrem Mittelsteg (89a bzw. 90a) sich gleichsinnig etwa normal wegerstreckenden Randstegen (89a bzw. 90b) mittels wenigstens zwei in der Rasteranordnung der Löcher (3 bzw. 73) im Seitensteg (2b bzw. 72b) des zugeordneten Tragrahmens (2 bzw. 72) entsprechender Anordnung in jedem Randsteg (89b bzw. 90b) dieser Blechrinne (89 bzw. 90) vorgesehene Löcher durchgreifender Schraubelemente (21) in mit wenigstens einem seiner Randstege (89b) einen Seitensteg (2b bzw. 72b) des Tragrahmens (2 bzw. 72) übergreifender und/oder in mit wenigstens einem seiner Randstege (90b) von einem Seitensteg (2b bzw. 72b) des Tragrahmens (2 bzw. 72) ubergriffener Stellung mit diesem verschraubt ist.

27. Bandfördervorrichtung nach einem der vorhergehenden Ansprüche mit einem Tragrahmen in Ausführung eines ersten Tragrahmens und/oder eines weiteren Tragrahmens als C-Profil, dadurch gekennzeichnet, daß mindestens ein Deckblech (91) vorgesehen ist, das mittels längs seiner Ränder angeordnete und im Randsteg (2c bzw. 72c) des Tragrahmens (2) oder eines etwaigen weiteren Tragrahmens (72) angeordnete Löcher durchgreifender Schraubelemente (92) mit diesem verschraubt ist.

28. Bandfördervorrichtung nach Anspruch 26 oder 27, dadurch gekennzeichnet, daß einem Tragrahmen (2 bzw. 72) zugeordnet jeweils eine Blechrinne (89 bzw. 90) bzw. ein Deckblech (91) von etwa der Länge des Tragrahmens (2 bzw. 72) entsprechender Länge vorgesehen ist.

29. Bandfördervorrichtung nach Anspruch 26 oder 27, dadurch gekennzeichnet, daß einem Tragrahmen (2 bzw. 72) zugeordnet jeweils mindestens eine Blechrinne (89 bzw. 90) oder ein Deckblech (91) von höchstens der Hälfte der Länge des Tragrahmens (2 bzw. 72) entsprechender Länge vorgesehen ist.

30. Bandfördervorrichtung nach einem der Ansprüche 26 bis 29, dadurch gekennzeichnet, daß die Befestigungslöcher der Blechrinne(n) (89 bzw. 90) bzw. des bzw. der Deckbleche(s) (91) als sich parallel zur Richtung der Mittellängsachse der jeweiligen Blechrinne (89 bzw. 90) bzw. des jeweiligen Deckbleches (91) erstreckende Langlöcher ausgebildet sind.

31. Bandfördervorrichtung nach einem der vorhergehenden Ansprüche, dadurch gekennzeichnet, daß der Tragrahmen (2) und/oder ein etwaiger weiterer Tragrahmen (72) in seinem Bodensteg (2a bzw. 72a) zumindest auf dem außerhalb der Aufgabe- und/oder Abgabestelle gelegenen Bereich der Länge desselben eine Vielzahl von Löchern (93) aufweist.

32. Bandfördervorrichtung nach Anspruch 31, dadurch gekennzeichnet, daß die Löcher (93) im Bodensteg (2a bzw. 72a) von Tragrahmen (2) und/oder weiterem Tragrahmen (72) jeweils in gegeneinander versetzter linienförmiger Anordnung vorgesehen sind.

## Revendications

1. Dispositif transporteur à bande muni d'un moyen de transport sous forme d'une ou plusieurs bandes ou courroies ou bandes à charnière, en particulier transporteur à bande courte, comportant un châssis porteur (2) pour le moyen de transport (13), formé par un profilé en U ou en C autoporteur dont la branche centrale (2a) sert simultanément de tôle de glissement pour le brin supérieur de ce moyen de transport (13), le dispositif comportant aussi au moins un piétement, un rouleau d'entraînement et un rouleau de changement de direction ainsi qu'un moteur d'entraînement pour le rouleau d'entraînement, caractérisé en ce que ses ailes latérales (2b), qui s'étendent dans le même sens à partir de ses branches centrales et à peu près perpendiculairement à celles-ci (2a), présentent chacune une pluralité de trous (3) disposés selon une trame linéaire, sur une ligne (m) parallèle à la branche centrale, de préférence sur l'axe médian de l'aile latérale respective (2b), ces trous présentant le même entraxe et, au moins dans la direction de cette ligne de trame (m) ou transversalement à cette direction, la même dimension, et en ce qu'un flasque-palier (23) pour le moteur d'entraînement (26), ainsi que des paires de supports de rouleau (7, 17, 23), respectivement pour le rouleau de changement de direction (5) et pour le rouleau d'entraînement (15), et le piétement (31, 41) sont boulonnés sur les ailes latérales (2b) du châssis porteur (2) au moyen d'organes de boulonnage (21) qui passent par des trous (24) prévus, dans ces composants, selon une disposition correspondant à la disposition en trame des trous (13) du châssis porteur (2), un support de rouleau (23) d'une paire de supports de rouleau étant en même temps conçu comme flasque-palier pour le moteur d'entraî-

nement (26).

2. Dispositif transporteur à bande selon la revendication 1, caractérisé en ce que le moteur d'entraînement (26), conçu de préférence sous forme d'un moto-réducteur, est maintenu sur un support de rouleau (23), dans une position permettant un accouplement direct de son arbre de sortie (27) avec l'arbre (16) d'un ou plusieurs rouleau(x) d'entraînement (15) ou permettant une transmission du couple de rotation par l'intermédiaire d'une liaison flexible cinématique d'entraînement sous forme d'une transmission à courroie ou à chaîne (29), le support de rouleau (23) étant boulonné sur le châssis porteur (2) au moyen d'au moins deux organes de boulonnage (21) qui passent par des trous (24) qui y sont ménagés selon une disposition correspondant à la disposition en trame des trous (13) du châssis porteur (2)

3. Dispositif transporteur à bande selon la revendication 1 ou 2, caractérisé en ce que le ou les rouleau(x) de changement de direction (5) et/ou le ou les rouleau(x) d'entraînement (15) est retenu, ou sont respectivement retenus, dans une paire de supports de rouleau (65) qui peuvent respectivement, par une portion d'extrémité (67), être introduits depuis la face frontale du châssis porteur (2), dans l'espace creux du profilé de ce dernier, et qui, au moyen d'un mécanisme de bridage (66, 69), peuvent être ajustés en position pour le reglage de la distance de l'axe du rouleau d'entraînement (15), ou du rouleau de changement de direction (5), soutenu par ces supports, par rapport à la surface frontale du châssis porteur (2), et peuvent être bloqués en position de travail.

4. Dispositif transporteur à bande selon la revendication 3, caractérisé en ce que les supports de rouleau (65), que l'on peut introduire dans l'espace creux du profilé du châssis porteur (2), présentent, respectivement, sur leur portion d'extrémité (67), une fente borgne (68), symétrique par rapport à la ligne de trame (m) des trous (3) de l'aile latérale correspondante (2b) du châssis porteur (2), et s'ouvrant sur l'extrémité libre de la portion d'extrémité (67), et en ce que les mécanismes de bridage (66, 69) présentent respectivement un talon (66) sur le support de rouleau (65) et une tige filetée de serrage (69) qui prend appui d'une part par rapport à ce talon ou à une surface de pression du châssis porteur (2) et d'autre part par rapport à l'arbre (15) ou à l'axe (5) du rouleau à maintenir, ainsi qu'au moins deux organes de boulonnage (21) présentant une plaquette de serrage (64) respective ou commune qui saisit, par l'arrière, la portion d'extrémité (67) et au moyen de laquelle on peut bloquer le support de rouleau (65) sur le châssis porteur (2).

5. Dispositif transporteur à bande selon l'une des revendications précédentes, caractérisé en ce qu'il est prévu au moins un rouleau de guidage pour le brin inférieur (40), ou un jeu de ces rouleaux de guidage, de préférence une paire de tels rouleaux de guidage (40), ou de tels jeux de rouleaux de guidage, dont chacun ou chacune est retenu(e) dans une paire de flasques-paliers (53) qui sont respectivement boulonnés avec l'une des deux ailes latérales (2b), situées en face l'une de l'autre, du châssis porteur (2), au moyen d'au moins deux organes de boulonnage (21) qui passent par des trous (54) qui y sont ménagés selon une disposition correspondant à la disposition en trame des trous (3) du châssis porteur (2).

6. Dispositif transporteur à bande selon la revendication 5, caractérisé en ce qu'au moins un rouleau de guidage (40), ou un jeu de ces rouleaux de guidage, est disposé en amont du rouleau d'entraînement (par exemple 15) ou respectivement du jeu de rouleaux d'entraînement et/ou au moins un rouleau de guidage (40) ou un jeu de ces rouleaux de guidage est disposé en aval du rouleau d'entraînement (par exemple 15) ou respectivement du jeu de ces rouleaux d'entraînement, et en ce qu'au moins l'un de ces rouleaux de guidage (40) ou l'un des jeux de ces rouleaux de guidage est porté par la paire de supports de palier (par exemple 17) ou de flasques-paliers (par exemple 23) de l'arbre (par exemple 16) du rouleau d'entraînement.

7. Dispositif transporteur à bande selon l'une des revendications précédentes, réalisé sous la forme d'un transporteur à bande coudé, caractérisé par un châssis porteur (72) qui est formé par un second profilé en U ou en C autoporteur dont la branche centrale (72a) sert aussi simultanément de tôle de glissement pour le brin supérieur du moyen de transport (13), et dont les ailes latérales (72b) qui s'étendent dans le même sens à partir de sa branche centrale et à peu près perpendiculairement à celle-ci, présentent chacune une pluralité de trous (30) disposés selon une trame linéaire, sur une ligne parallèle à la branche centrale, de préférence sur l'axe médian de l'aile latérale respective, ces trous ayant le même entraxe et, au moins dans la direction de cette ligne de trame ou transversalement à cette direction, de la même dimension et caractérisé par un mécanisme de changement de direction (70) pour le moyen de transport (13), comportant respectivement une paire de supports à paliers (55) pour les axes (75 ou 77) d'un ou plusieurs rouleaux de changement de direction (74) pour le brin inférieur ou le brin supérieur du moyen de transport (13) et comportant aussi, pour l'autre brin du moyen de transport, un ou plusieurs galets presse-brin (76) qui présentent respectivement deux branches (55a, 55b) dont l'une est boulonnée à une aile latérale respective (2b) du châssis porteur (2) au moyen d'au moins deux organes de boulonnage (21) passant par les trous (3) de cette aile latérale (2b) du châssis porteur (2) et dont l'autre est boulonnée à une aile latérale respective (72b) du second châssis porteur (72) au moyen d'au moins deux organes de boulonnage (21) passant par les trous (73) de cette aile latérale (72b) de ce second châssis porteur (72).

8. Dispositif transporteur à bande selon la revendication 7, caractérisé en ce que respectivement l'une des branches (55a) de chaque support à palier (55) présente un organe formant portée pour l'axe (75) du rouleau, ou des rouleaux, de changement de direction (74), et en ce que l'autre branche (55b) de chaque support à palier (55) présente un organe formant portée pour l'axe (77) du galet ou des galets, presse-brin (76).

9. Dispositif transporteur à bande selon la revendication 7 ou 8, caractérisé en ce que la position angulaire mutuelle des branches (55a, 55b) des deux supports à palier (55) du mécanisme de changement de direction (70) peut être modifiée.

10. Dispositif transporteur à bande selon l'une des revendications 7 à 9, caractérisé en ce que au moins l'une des branches (55a ou 55b) des supports à palier (55) présente respectivement au moins deux trous placés selon une disposition correspondant à la disposition en trame des trous (3 ou 73) des ailes latérales (2b ou 72b) du châssis porteur correspondant (2 ou 72), et est boulonnée à l'aile latérale correspondante (2b ou 72b) du châssis porteur (2) ou du second châssis porteur (72) au moyen d'organes de boulonnage (21) qui passent par ces trous.

11. Dispositif transporteur à bande selon l'une des revendications 7 à 10, caractérisé en ce qu'au moins deux branches (55a ou 55b), situées l'une en face de l'autre des supports à palier (55) présentent chacune une portion d'extrémité (57a ou 57b) que l'on peut introduire, depuis la face frontale du châssis porteur (2) ou du second châssis porteur (72), dans l'espace creux du profilé de ce châssis porteur, et en ce qu'il est respectivement prévu un mécanisme de bridage (par exemple 56a, 59a) au moyen duquel la branche respective (par exemple 55a) peut être ajustée en position pour le réglage de la distance de l'axe de l'arbre, ou des arbres, ou de l'axe, ou des axes (75), supportés par cette branche, par rapport à la face frontale du châssis porteur correspondant (2) ou du second châssis porteur (72), et peut être bloquée en position de travail.

12. Dispositif transporteur à bande selon la revendication 11, caractérisé en ce que les branches (55a ou 55b) des supports à paliers (55), que l'on peut introduire dans un espace creux du profilé du châssis porteur (2) ou du second châssis porteur (72), présentent chacune dans leur portion d'extrémité (57a ou 57b) une fente borgne (58a ou 58b) symétrique par rapport à la ligne de trame (m) des trous (3 ou 73) de l'aile latérale correspondante (2b ou 72b) du châssis porteur (2) ou du second châssis porteur (72) et s'ouvrant sur l'extrémité libre de la portion d'extrémité (57a ou 57b), et en ce que le mécanisme de bridage (par exemple 56a, 59a) présente respectivement un talon (par exemple 56a) sur la branche correspondante (par exemple 55a) du support à palier (55) et une tige filetée de serrage (par exemple 59a), qui prend appui, d'une part, par rapport à ce talon ou à une surface de pression du châssis porteur (par exemple 2) ou du second châssis porteur (72) et, d'autre part, par rapport à l'axe (par exemple 75) du rouleau ou du galet à maintenir, ainsi qu'au moins deux organes de boulonnage (21) avec chacun une plaquette de serrage (64) respective ou commune, qui saisit par l'arrière la portion d'extrémité (par exemple 57a), et au moyen de laquelle la branche en question (par exemple 55a) peut être bloquée sur le châssis porteur (2) ou sur le second châssis porteur (72).

13. Dispositif transporteur à bande selon l'une des revendications 2 et 5 à 10, caractérisé en ce que les trous de fixation (24 ou 8 ou 18 ou 54) du flasque-palier (23) prévu pour le moteur d'entraînement (26) et/ou des supports (7 ou 17) du ou des rouleau(x) d'entrée (5) et/ou du ou des rouleau(x) de sortie (15) et/ou des flasques-paliers du ou des rouleau(x) d'entraînement et/ou des flasques (53) du ou des rouleau(x) de guidage (40) et/ou des branches (55a ou 55b) des supports à palier (55) du mécanisme de changement de direction (70) sont respectivement conçus sous forme de lumières oblongues s'étendant dans la direction de la ligne de trame (m) des trous (3 ou 73) ménagés dans les ailes latérales (2b ou 72b) du châssis porteur principal (2) ou du second châssis porteur (72), auquel cas, il est de préférence chaque fois prévu un mécanisme de bridage (19, 19a, 22) au moyen duquel le flasque-palier en question (23) ou les supports de rouleau (7 ou 17) ou le flasque (53) ou les branches (55a ou 55b) des supports a palier peuvent être ajustés en position par des moyens mécaniques, et en continu, dans la direction de cette ligne de trame (m) et peuvent être bloqués en position de travail.

14. Dispositif transporteur à bande selon la revendication 13, comportant des mécanismes de bridage pour un flasque-palier ou des flasques-paliers et/ou pour des supports de rouleau et/ou pour un flasque ou des flasques et/ou pour des branches de support à palier du mécanisme de changement de direction, caractérisé en ce que le mécanisme de bridage présente une éclisse de contre-butée (9 ou 19) qui vient recouvrir, sur sa face extérieure, et saisir le flasque-palier (23) ou le support de rouleau (7 ou 17) ou le flasque (53) ou la branche (55a ou 55b) du support à palier qui lui est associé(e), ainsi qu'une plaquette de serrage (64) qui vient recouvrir, sur sa face intérieure, et saisir l'aile latérale (2b ou 72b) correspondante du châssis porteur (2) ou du second châssis porteur (72), éclisse de contre-butée et plaquette de serrage qui présentent chacune, l'une et l'autre, au moins deux trous (10 ou 20) prévus selon la disposition correspondant à la disposition en trame des trous (3 ou 73) du châssis porteur associé (2 ou 72), et qui sont fixées, sans possibilité de coulissement, sur cette aile latérale (2b ou 72b) du châssis porteur (2) ou du second châssis porteur (72) au moyen d'organes de boulonnage (2) qui passent à la fois par ces trous (10 ou 20) et par les trous (3 ou 73), alignés avec ceux-ci, de l'aile latérale correspondante (2b ou 72b) du châssis porteur (2) ou du second châssis porteur (72), auquel cas l'éclisse de contre-butée (9 ou 19) présente, à son extrémité éloignée du rouleau, un rebord (9a ou 19a) par rapport auquel prend appui un élément fileté (12 ou 22) qui, par son autre extrémité, se trouve en butée contre une surface de pression prevue sur le flasque-palier (23) ou sur le support de rouleau (7 ou 17) ou sur le flasque (53) ou sur la branche (55a ou 55b) du support à palier, qui lui est associé(e), de préférence, sur une surface frontale de ce flasque-palier ou de ce support de rouleau ou de ce flaque ou de cette branche de support à palier.

15. Dispositif transporteur à bande selon la revendication 14, caractérisé en ce que l'élément fileté de bridage est formé par une tige filetée (22) vissée dans un trou taraudé ménagé dans le rebord (9a ou 19a) de l'éclisse (9 ou 19) de contre-butée.

16. Dispositif transporteur à bande selon l'une des revendications précédentes, caractérisé par au moins une paire de montants verticaux (32) qui sont reliés l'un à l'autre de préférence par l'intermédiaire de traverses (33) et qui présentent chacun, d'un côté, un organe de fixation en position, par exemple sous forme d'une plaquette de pied (36) et, de l'autre côté, une bride de raccordement (37) par l'intermédiaire de laquelle ils sont boulonnés à une aile latérale (2b ou 72b) du châssis porteur (2) ou d'un second châssis porteur (72).

17. Dispositif transporteur à bande selon l'une des revendications précédentes, caractérisé par au moins un montant porteur (42), disposé à peu près au milieu au moins du châssis porteur principal, de préférence par un nombre de tels montants porteurs (42) correspondant au nombre des piétements (41), ce ou ces montant(s) verticau(x) présentant respectivement à son extrémité supérieure, ou à leur extrémité supérieure, une traverse (43) qui, de son côté, présente, à chacune de ses extrémités, une bride de raccordement (44) par l'intermédiaire de laquelle cette traverse est boulonnée à une aile latérale (2b ou 72b) du châssis porteur (2) ou d'un éventuel second châssis porteur (72), et, à son extrémité, ou à leur extrémité, éloignée de la traverse, un organe (46) d'immobilisation en position.

18. Dispositif transporteur à bande selon la revendication 17, caractérisé en ce que l'organe d'immobilisation en position est conçu sous la forme d'une plaquette de pied (46), de préférence réglable en hauteur par rapport à la traverse (43).

19. Dispositif transporteur à bande selon la revendication 17, caractérisé en ce que l'organe d'immobilisation en position est conçu sous la forme d'une sellette, de préférence déplaçable et/ou réglable en hauteur par rapport à la traverse (43).

20. Dispositif transporteur à bande selon l'une des revendications 16 à 19, caractérisé en ce que les montants verticaux (32) d'au moins une paire de montants verticaux (32) ou bien l'unique montant vertical prévus ou respectivement au moins l'un des différents montants verticaux prévus (42), est ou sont respectivement formé(s) d'au moins deux pièces élémentaires (32a, 32b, 32c ou 42a, 42b) qui peuvent coulisser télescopi-quement l'une dans l'autre et qui peuvent être fixées dans la direction de travail désirée au moyen d'un organe de blocage (71 ou 38).

21. Dispositif transporteur à bande selon l'une des revendications 16 à 20, caractérisé en ce que les brides de raccordement (37 ou 44) sont respectivement boulonnées au châssis porteur correspondant (2 ou 72) au moyen d'au moins deux organes de boulonnage (21) qui passent dans des trous qui y sont ménagés selon une disposition correspondant à la disposition en trame de trous (3 ou 73) des ailes latérales (2b ou 72b) du châssis porteur (2) ou de l'éventuel second châssis porteur (72).

22. Dispositif transporteur à bande selon l'une des revendications 16 à 20, caractérisé en ce qu'il est prévu au moins une paire de flasques de pivotement (47), de préférence un nombre de paires de flasques de pivotement (47) correspondant au nombre des piétements (31 ou 41), flasques de pivotement qui sont respectivement boulonnés au châssis porteur correspondant (12 ou 72), au moyen d'au moins deux organes de boulonnage (21) qui passent dans des trous (48) qui y sont ménagés selon une disposition correspondant à la disposition en trame des trous (3 ou 73) des ailes latérales (2b ou 72b) du châssis porteur (2) ou de l'éventuel second châssis porteur (72), et qui présentent une fente longitudinale (50) en forme d'arc de cercle concentrique à l'un de ces trous (48) ou de préférence à un autre trou (49), et en ce que les brides de raccordement (37 ou 44) correspondantes des montants verticaux (32 ou 42), prévus isolément ou par paire, présentent chacune une paire de trous (37a ou 44a) rapportée, sous une certaine inclinaison par rapport à la disposition des trous (3 ou 73) du châssis porteur (2 ou 72) et à une distance mutuelle correspondant à la distance entre le milieu de la fente en forme d'arc de cercle (50) et du trou (48 ou 49) qui en est le centre sur le flasque de pivotement correspondant (47), trous par l'intermédiaire desquels ces brides de raccordement peuvent être respectivement fixées au flasque de pivotement, dans la position de travail désirée, au moyen d'éléments filetés (51, 52) qui passent à travers lesdits trous et à travers la fente en forme d'arc de cercle (50) ou dans le trou (48 ou 49) qui en est le centre dans le flasque de pivotement (47) correspondant.

23. Dispositif transporteur à bande selon l'une des revendications précédentes, caractérisé en ce que sur l'une des ailes latérales (2b) du châssis porteur (2) est solidarisé au châssis porteur (2), au moyen d'organes de boulonnage (21) qui passent par au moins deux trous (79) qui y sont ménagés selon une disposition correspondant à la disposition en trame des trous (3) prévus dans l'aile latérale correspondante (2b) du châssis porteur (2), un flasque porteur (78) sur lequel est fixé un pupitre de commande (82) pour le moteur d'entraînement (26).

24. Dispositif transporteur à bande selon l'une des revendications précédentes, caractérisé en ce qu'au moins le long d'une aile latérale (2b ou 72b) du châssis porteur (12 ou 72), de préférence le long des deux ailes latérales (2b ou 72b) du châssis porteur (2 ou 72), de préférence le long des deux ailes latérales (2b ou 72b) de ce dernier et au-dessus du brin supérieur du moyen de transport (13), est maintenue au moins une règle (83) de guidage latéral pour le produit transporté, qui est respectivement fixée à au moins un flasque porteur (84) boulonné au châssis porteur (2 ou 72) au moyen d'au moins deux organes de boulonnage (21) qui passent dans des trous (85) ménagés dans le flasque porteur (84) selon une disposition correspondant à la disposition en trame des trous (3 ou 73) ménagés dans l'aile latérale respective (2b ou 72b) du châssis porteur correspondant (2 ou 72).

25. Dispositif transporteur à bande selon la revendication 24, caractérisé en ce que la règle (83) de guidage latéral est réalisée sous forme d'un profilé en C et en ce qu'elle est fixée, avec possibilité d'être rapidement détachée, à chaque flasque porteur (84) au moyen d'une plaquette de serrage (87) introduite dans la zone du flasque porteur (84), dans l'espace creux de son profilé en venant saisir par l'arrière son rebord, en ce sens que, par l'intermédiaire d'un élément fileté (88) qui vient se visser dans la plaquette de serrage (87), cette plaquette de serrage et les bords repliés de la règle (87) de guidage latéral sont tirés contre une platine de butée (84a) du flasque porteur (84).

26. Dispositif transporteur à bande selon l'une des revendications précédentes, caractérisé en ce qu'au moins une goulotte en tôle en forme de U (89) ou (90), présentant des bords repliés (89a) ou (90b) qui s'étendent dans le même sens à partir de sa partie médiane et à peu près perpendiculairement à celle-ci (89a ou 90a) de la tôle, est boulonnée au châssis porteur (2 ou 72) au moyen d'au moins deux organes de boulonnage (21) qui passent dans des trous ménagés dans chaque bord replié (89b ou 90b) de cette goulotte en tôle (89 ou 90), selon une disposition correspondant à la disposition en trame des trous (3 ou 73) prévus dans l'aile latérale (2b ou 72b) du châssis porteur correspondant (2 ou 72), dans une position ou elle recouvre par au moins l'un de ses bords repliés (89b), une aile latérale (2b ou 72b) du châssis porteur (2 ou 72), et/ou dans une position ou elle est recouverte au niveau d'au moins l'un de ses bords repliés (90b), par une aile latérale (2b ou 72b) du châssis porteur (2 ou 72).

27. Dispositif transporteur à bande selon l'une des revendications précédentes, comportant un châssis porteur constitué par un premier châssis porteur et/ou un second châssis porteur sous la forme d'un profilé en C, caractérisé en ce qu'il est prévu au moins une tôle de recouvrement (91) qui est boulonnée à ce châssis porteur au moyen d'organes de boulonnage (92) qui passent dans des trous disposés le long des bords de la tôle de recouvrement (91) et disposés dans l'aile latérale (2c ou 72c) du châssis porteur (2) ou d'un éventuel second châssis porteur (72).

28. Dispositif transporteur à bande selon la revendication 26 ou 27, caractérisé en ce qu'à chaque châssis porteur (2 ou 72), est associé une goulotte en tôle (89 ou 90) ou une tôle de recouvrement (91) de longueur correspondant à peu près à la longueur du châssis porteur (2 ou 72).

29. Dispositif transporteur à bande selon la revendication 26 ou 27, caractérisé en ce qu'à chaque châssis porteur (2 ou 72), est associée au moins une goulotte en tôle (89 ou 90) ou une tôle de recouvrement (91) de longueur correspondant au maximum à la moitié de la longueur du châssis porteur (2 ou 72).

30. Dispositif transporteur à bande selon l'une des revendications 26 à 29, caractérisé en ce que les trous de fixation de la ou des goulotte(s) en tôle (89 ou 90) ou respectivement de la ou des tôle(s) de recouvrement (91), sont concus sous forme de lumières oblongues s'étendant parallèlement à la direction de l'axe longitudinal médian de la goulotte en tôle respective (89 ou 90) ou de la tôle de recouvrement respective (91).

31. Dispositif transporteur à bande selon l'une des revendications précédentes, caractérisé en ce que le châssis porteur (2) et/ou un éventuel second châssis porteur (72) présente, dans sa branche centrale (2a ou 72a), une pluralité de trous (93), au moins sur la zone, située à l'extérieur de l'emplacement d'entrée et/ou de l'emplacement de sortie, de la longueur du châssis porteur respectif.

32. Dispositif transporteur à bande selon la revendication 31, caractérisé en ce que les trous (93) ménagés dans la branche centrale (2a ou 72a) du châssis porteur (2) et/ou du second châssis porteur (72) sont respectivement agencés selon une disposition linéaire, avec un décalage mutuel.

**Claims**

1. Belt conveyor with a conveying means in the form of one or more belts or bands or conveyor tracks; in particular a small belt conveyor, with a supporting frame (2) therefor formed by a self-supporting U- or C-section serving at the same time, with a base panel (2a), as a slide plate for the upper run of the conveying means (13), with at least one stand, with a drive roller and a guide roller and with a drive motor for the drive roller, characterised in that its side panels (2b), extending approximately normally away from its base panel (2a) in the same direction, each comprise a plurality of holes (3) disposed in a linear grid in a grid line (m) parallel to the base panel (2a), preferably the centre-line of the respective side panel (2b), and being equidistant from one another and, at least in or transverse to the direction of the grid line (m), of equal size, and in that an end bearing shield (23) for the drive motor (26), pairs of roller brackets (7, 17, 23), for both the guide roller (5) and the drive roller (15), and the stand (31, 41) are screwed to the side panels (2b) of the supporting frame (2) by means of screw elements (21) engaging through holes (24) in such components and provided in an arrangement corresponding to the grid arrangement of the holes (13) in the supporting frame (2), with one roller bracket (23) of one of the roller bracket pairs also acting as the end bearing shield for the drive motor (26).

2. Belt conveyor according to claim 1, characterised in that the drive motor (26), preferably constructed in the form of a gear motor, is held on a roller bracket (23) in a position enabling direction connection of its output shaft (27) to the shaft (16) of one or more drive roller(s) (15) or a torque transfer means via a kinematic drive-chain pulley block in the form of a belt or chain drive (29), with the roller bracket (23) being screwed to the supporting frame (2) by means of at least two screw-type elements (21) which engage holes (24) in the supporting frame (2) and are provided in an arrangement corresponding to the grid arrangement of the holes (13) in the supporting frame (2).

3. Belt conveyor according to claim 1 or 2, characterised in that the guide roller(s) (5) and/or the drive roller(s) (15) is/are each held in a pair of roller brackets (65), each insertable into the end face of the supporting frame (2) into its section cavity by means of an end-piece (67), and, by means of a clamping apparatus (66, 69), is/are each adjustable relative to the axial distance from the centre of the drive roller (15) or guide roller (5), supported by such roller brackets (65), to the end face of the supporting frame (2) and fixable in its working position.

4. Belt conveyor according to claim 3, characterised in that the roller brackets (65) insertable into the section cavity of the supporting frame (2) each comprise in their end-piece (67) a blind slot (68) symmetrical with respect to the grid line (m) of the holes (3) of the associated side panel (2b) of the supporting frame (2) and being open in the direction of the free end of the end-piece (67), and in that each clamping apparatus (66, 69) comprises a projection (66) on the roller bracket (65) and a clamping pin (69) supported on one side, opposite the projection (66) or a contact surface of the supporting frame (2), and on the other side opposite the roller shaft (15) or (5) to be held, as well as at least two screw fittings (21) each with a or a common clamping plate (64) engaging behind the end-piece (67), by means of which the roller bracket (65) is fixable on the supporting frame (2).

5. Belt conveyor according to any of the preceding claims, characterised in that at least one guide roller for the lower run (40) or a set of the same, preferably a pair of such guide rollers (40) or sets thereof, is/are provided, each one or set of which is held in a pair of bearing flanges (53), which are each screwed to one of the two opposite side panels (2b) of the supporting frame (2) by means of at least two screw-type elements (21), which engage in holes (54) in the bearing flanges (53) and are provided in an arrangement corresponding to the grid arrangement of the holes (3) in the supporting frame (2).

6. Belt conveyor according to claim 5, characterised in that at least one guide roller (40) or a set of the same is positioned before the or the set of drive rollers (e.g. 15) and/or at least one guide roller (4) or a set thereof is positioned after the or the set of drive rollers (e.g. 15), and in that at least one of the guide rollers (40) or the sets thereof is supported by the pair of bearing supports (e.g. 17) or end shields (e.g. 23) of the drive roller shaft (e.g. 16).

7. Belt conveyor according to any of the preceding claims, in the form of a knee-type belt conveyor, characterised by a supporting frame (72), formed by a further self-supporting U- or C-section likewise serving at the same time in its base panel (72a) as a slide plate for the upper run of the conveying means (13), the side panels (72b) of such supporting frame (72) - extending away from its base panel (72a) in the same direction and approximately normally - each comprising a plurality of holes (30) disposed in a line grid in a line parallel to the base panel, preferably the centre line of the respective side panel, and being equidistant from one another and, at least in or transverse to the direction of the grid line, of equal size, and by a guide apparatus (70) for the conveying means (13) with a pair of bearing supports (55) for each of the shafts (75 and 77) of one or more guide roller(s) (74) for the upper or lower run of the conveying means (13) and, for the other run of the conveying means (13), with one or more holding-down roller(s) (76) each comprising two legs (55a, 55b), one of which, in each case, is screwed to the supporting frame (2) by means of at least two screw-type elements (21) which engage the holes (3) of a side panel (2b) of the supporting frame (2), the other being screwed to the further supporting frame (72) by means of at least two screw-type elements (21), which engage the holes (73) of a side panel (72b) of the further supporting frame (72).

8. Belt conveyor according to claim 7, characterised in that one leg (55a) of each bearing support (55) comprises a holding apparatus for the shaft (75) of the guide roller(s) (74) and in that the other leg (55b) of each bearing support (55) comprises a holding apparatus for the shaft (77) of the holding-down roller(s) (76).

9. Belt conveyor according to claim 7 or 8, characterised in that the legs (55a, 55b) of both bearing supports (55) of the guide apparatus (70) are variable with respect to one other in their angular positions.

10. Belt conveyor according to any of claims 7 to 9, characterised in that at least one of the legs (55a or 55b) of the bearing supports (55) comprises at least two holes, disposed in an arrangement corresponding to the grid arrangement of the holes (3 or 73) of the side panels (2b or 72b) of the corresponding supporting frame (2 or 72) and is screwed to the supporting frame (2) or of the further supporting frame (72) by means of screw-type elements (21) which engage such holes.

11. Belt conveyor according to any of claims 7 to 10, characterised in that at least one pair of opposite legs (55a or 55b) of the bearing supports (55) each comprises an end-piece (57a or 57b) which is insertable into the end face of the supporting frame (2) or of the further supporting frame (72) in the section cavity of the latter and in that, in each case, a clamping apparatus (e.g. 56a, 59a) is provided, by means of which the respective leg (e.g. 55a) is adjustable with respect to the centre-to-centre distance between the shaft(s) (75), supported by such leg, and the end face of the corresponding supporting frame (2) or further supporting frame (72) and fixable in a working position.

12. Belt conveyor according to claim 11, characterised in that the legs (55a and 55b) of the bearing supports (55), insertable into a section cavity of the supporting frame (2) or of the further supporting frame (72), each comprise in their endpiece (57a or 57b) a blind slot (58a or 58b) which is symmetrical with respect to the grid line (m) of the holes (3 or 73) of the corresponding side panel (2b or 72b) of the supporting frame (2) or of the further supporting frame (72) and being open in the direction of the free end of the end-piece (57a or 57b), and in that the clamping apparatus (e.g. 56a, 59a) comprises a projection (e.g. 56a) on the corresponding leg (e.g. 55a) of the bearing support (55) and a clamping pin (e.g. 59a) supported at one end opposite the projection or a contact surface of the supporting frame (e.g. 2) or of the further supporting frame (72) and at the other end opposite the roller shaft (e.g. 75) to be held, as well as at least two screw fittings (21) each with a or a common clamping plate (64) engaging behind the end-piece (e.g. 57a), by means of which the respective leg (e.g. 55a) is fixable on the supporting frame (2) or on the further supporting frame (72).

13. Belt conveyor according to any of claims 2 and 5 to 10, characterised in that the fixing holes (24 or 8 or 18 or 54) of the end shield (23) for the drive motor 26 and/or of the roller brackets (7 or 17) of the feeding roller(s) (5) and/or of the discharge roller(s) (15) and/or of the end shields of the drive roller(s) and/or of the bearing flanges (53) of the guide roller(s) (40) and/or of the legs (55a or 55b) of the bearing brackets (55) of the guide apparatus (70) are each in the form of elongated holes, which extend in the direction of the grid line (m) of the holes (3 or 73) in the side panels (2b or 72b) of the main supporting frame (2) or of the further supporting frame (72), a clamping apparatus (19, 19a, 22) preferably being provided in each case, by means of which the respective end shield (23) or roller bracket (5 or 15) or bearing flange (53) or bearing support leg (55a or 55b) is adjustable in a positive non-slip infinitely variable manner in the direction of the grid line (m) and fixable in a working position.

14. Belt conveyor according to claim 13, with clamping apparatus for the end shield(s) and/or roller bracket(s) and/or bearing flange(s) and/or bearing support leg(s) of the guide apparatus, characterised in that each clamping apparatus comprises an abutting bearing strip (9 or 19) overlapping the corresponding end shield (23) or roller bracket (5 or 15) or bearing flange (53) or bearing support leg (55a or 55b) on the outside of the latter and a clamping plate (64) overlapping the corresponding side panel (2b or 72b) of the supporting frame (2) or of the further supporting frame (72) on the inside of the latter, such abutting bearing strip (9 or 19) and clamping plate (64) each comprising at least two holes (10 or 20) disposed in an arrangement corresponding to the grid arrangement of the holes (3 or 73) of the corresponding supporting frame (2 or 72) and being immovably fixed to the corresponding side panel (2b or 72b) of the supporting side panel (2b or 72b) of the supporting frame (2) or of the further supporting frame (72) by means of screw-type elements (2), which extend in common through such holes (10 or 20) and through holes (3 or 73) of such side panel (2b or 72b) of the supporting frame (2) or other further supporting frame (72), the holes (3 or 73) being in alignement with holes (10 or 20), the abutting bearing strip (9 or 19) comprising, at its end remote from the roller an abutting bearing flange (9a or 19a) opposite which is supported a screw fitting (12 or 22) in contact at its other end with a contact surface on the corresponding end shield (23) or roller bracket (5 or 15) or bearing flange (53) or bearing support leg (55a or 55b), preferably with an end face of the latter.

15. Belt conveyor according to claim 14, characterised in that the clamping screw fitting is formed by a threaded pin (22) screwed into a threaded hole in the abutting bearing flange (9a or 19a) of the abutting bearing strip (9 or 19).

16. Belt conveyor according to any of the preceding claims, characterised by at least one pair of base uprights (32), preferably connected to one another by means of cross members (33) and each comprising at one end an apparatus for stationary fixing, for example in the form of a foot plate (36), and at the other end a connecting flange (37), by which such base uprights (32) are screwed to a side panel (2b or 72b) of the supporting frame (2) or of a possible further supporting frame (72).

17. Belt conveyor according to any of the preceding claims, characterised by at least one supporting upright (42), disposed approximately centrally at least relative to the main supporting frame, with preferably a number of such supporting uprights (42) corresponding to the number of stands (41), the or each supporting upright (42) comprising at the upper end a cross-member (43) comprising at each end a connecting flange (44), by which such cross-member is screwed to a side panel (2b or 72b) of the supporting frame (2) or of a possible further supporting frame (72), and each supporting upright (42) comprising at the end away from the cross member an apparatus (46) for stationary fixing.

18. Belt conveyor according to claim 17, characterised in that the apparatus for stationary fixing is in the form of a foot plate (46) preferably height-adjustable in relation to the cross member (43).

19. Belt conveyor according to claim 17, characterised in that the apparatus for stationary fixing is in the form of a base sub-frame, preferably movable and/or height-adjustable in relation to the cross-member (43).

20. Belt conveyor according to any of claims 16 to 19, characterised in that the base uprights (32) of at least one pair of base uprights (32) or the base upright (42) or at least one of the singly provided base uprights (42) is/are each formed from at least two components (32a, 32b, 32c or 42a, 42b) each adapted to slide telescopically into one another and being lockable in the desired working direction by means of a locking apparatus (71 or 38).

21. Belt conveyor according to any of claims 16 to 20, characterised in that the connecting flanges (37 or 44) are each screwed to the corresponding supporting frame (2 or 72) by means of at least two screw-type elements (21) which engage holes provided in the side panels (2b or 72b) of the supporting frame (2) or of a possible further supporting frame (72) and disposed in an arrangement corresponding to the grid arrangement of the holes (3 or 73) in such side panels (2b or 72b).

22. Belt conveyor according to any of claims 16 to 20, characterised in that, corresponding to the number of stands (31 or 41), at least one pair and, preferably, a number of pairs of pivot flanges (47) are provided, each being screwed to the corresponding supporting frame (2 or 72) by means of at least two screw-type elements (21), which engage holes (48) in the side panels (2b or 72) of the supporting frame (2) or of a possible further supporting frame (72), such holes (48) being provided in an arrangement corresponding to the grid arrangement of the holes (3 or 73) in such side panels (2b or 72), and the pivot flanges (47) each comprising an arc-shaped longitudinal slot (50) concentric with respect to one of the holes (48) or preferably with respect to a further hole (49), and in that the corresponding connecting flanges (37 or 44) of the single or pairs of base uprights (32 or 42) each comprise a pair of holes (37a or 44a) provided at a distance from one another corresponding to the centre-to-centre distance between the arc-shaped slot (50) and its centre-point hole (48 or 49) in the corresponding pivot flange (47), the pair of holes (37a or 44a) being inclined with respect to the arrangement of the holes (3 or 73) in the supporting frame (2 or 72), by which holes (37a or 44a) the connecting flanges (37 or 44) are each locatable on the corresponding pivot flange (47) in the desired working position by means of screw fittings (51, 52) which engage the holes (37a or 44a) and the arc-shaped slot (50) or its centre-point hole (48 or 49) in the pivot flange (47).

23. Belt conveyor according to any of the preceding claims, characterised in that, on one of the side panels (2b) of the supporting frame (2), a supporting flange (78) is fixed to the supporting frame (2) by means of screw-type elements (21) which engage at least two of a number of holes (79) in the supporting frame (2), such holes (79) being provided in an arrangement corresponding to the grid arrangement of the holes (3) in the corresponding side panel (2b) of the supporting frame (2), to which supporting flange (78) a control console (82) for the drive motor (26) is attached.

24. Belt conveyor according to any of the preceding claims, characterised in that at least along one side panel (2b or 72b) of the supporting frame (2 or 72), preferably along both side panels (2b or 72b) of the latter (2 or 72), at least one lateral guide strip (83) for the material being conveyed is held above the upper run of the conveying means (13) in that it is fixed to at beast one supporting flange (84) screwed to the supporting frame (2 or 72) by means of at least two screw-type elements (21), which engage in holes (85) in the supporting flange (84) and are provided in an arrangement corresponding to the grid arrangement of the holes (3 or 73) in the corresponding side panel (2b or 72b) of the corresponding supporting frame (2 or 72).

25. Belt conveyor according to claim 24, characterised in that the lateral guide strip (83) is in the form of a C-section and, by means of a clamping plate (87), it is introduced into the section cavity of the C-section in the region of each supporting flange (84) by engaging behind the edge flanges of such C-section, fixed to the supporting flanges of such C-section, fixed to the supporting flange (84) in a quickly-disconnectible manner in that the clamping plate (87) and the edge panels of the lateral guide strip (83) are drawn against a stop lug (84a) of the supporting flange (84) by a screw fitting (88) engaging the clamping plate (87).

26. Belt conveyor according to any of the preceding claims, characterised in that at least one U-shaped plate channel (89) or (90) with edge panels (89b or 90b) extending away from its centre panel (89a or 90a) in the same direction and approximately normally is screwed to the supporting frame (2 or 72) by means of at least two screw-type elements (21) which engage holes in each edge panel (89b or 90b) or the plate channel (89 or 90) are provided in an arrangement corresponding to the grid arrangement of the holes (3 or 73) in the side panel (2b or 72b) of the corresponding supporting frame (2 or 72), the plate channel (89 or 90) being screwed to the supporting frame (2 or 72) in a position in which at least one of its edge panels (89b) overlaps a side panel (2b or 72b) of the supporting frame (2 or 72) and/or in which at least one of its edge panels (90b) is overlapped by a side panel (2b or 72b) of the supporting frame (2 or 72).

27. Belt conveyor according to any of the preceding claims, with a supporting frame in the form of a first supporting frame and/or of a further supporting frame as a C-section, characterised in that at least one cover plate (91) is provided, which is screwed to the supporting frame (2) or to a possible further supporting frame (72) by means of screw-type elements (92) which engage holes disposed along the edges of the cover plate (91) and in the edge panel (2c or 72c) of the supporting frame (2) or of the possible further supporting frame (72).

28. Belt conveyor according to claim 26 or 27, characterised in that, associated with a supporting frame (2 or 72), a plate channel (89 or 90) or a cover p-late (91) is provided, having a length corresponding approximately to the length of the supporting frame (2 or 72).

29. Belt conveyor according to claim 26 or 27, characterised in that, associated with a supporting frame (2 or 72), at least one plate channel (89 or 90) or a cover plate (91) is provided, having a length corresponding to at most half the length of the supporting frame (2 or 72).

30. Belt conveyor according to any of claims 26 to 29, characterised in that the fixing holes of the plate channel(s) (89 or 90) or of the cover plate(s) (91) are in the form of elongated holes extending parallel to the direction of the central longitudinal axis of the respective plate channel (89 or 90) or of the respective cover plate (91).

31. Belt conveyor according to any of the preceding claims, characterised in that the supporting frame (2) and/or a possible further supporting frame (72) has a plurality of holes (93) in its base panel (2a or 72a), at least in the region of its length, outside the feed- and/or discharge point.

32. Belt conveyor according to claim 31, characterised in that the holes (93) in the base panel (2a or 72a) of the supporting frame (2) and/or further supporting frame (72) are disposed in a linear arrangement offset with respect to one another.

Fig.1

EP 0 121 920 B1

Fig. 4a

Fig. 4b

Fig. 4c

Fig. 3

Fig. 2